# EUROPEAN PATENT APPLICATION

(11) **EP 4 752 691 A1**
(43) Date of publication of application: **03.06.2026**
(21) Application number: 23962808.4
(22) Date of filing: 29.12.2023
(51) Int. Cl.: G06F 3/0481

(54) **DISPLAY METHOD AND RELATED DEVICE**

(71) Applicant: Honor Device Co., Ltd., Shenzhen, Guangdong 518040 (CN)
(72) Inventor: LI, Jingqi, Shenzhen, Guangdong 518040 (CN); CAI, Huiyue, Shenzhen, Guangdong 518040 (CN); ZHU, Weinan, Shenzhen, Guangdong 518040 (CN); LIANG, Hengzhou, Shenzhen, Guangdong 518040 (CN); DIAO, Zhengyuan, Shenzhen, Guangdong 518040 (CN)
(74) Representative: Isarpatent
(86) International application number: PCT/CN2023/143336
(87) International publication number: WO 2025/138134

(57) **Abstract**

This application discloses a display method and a related device. In the method, an electronic device may pre-cache a new element to a user interface, and set the new element to an invisible state. If the electronic device detects a removal operation performed on an element in a container, the electronic device sets an animation type of a to-be-removed element to DISAPPEARING, sets an animation type of another element in the container and an animation type of the new element to CHANGE_DISAPPEARING, and sets the new element to a visible state. The electronic device may perform an animation for each element in the container, and display a corresponding animation effect on a display screen. In the method, the electronic device may simultaneously display animation effects for removal and addition of elements, without displaying the animation effect for removal of elements first and then displaying the animation effect for addition of elements. Therefore, the entire animation effect is continuous and smooth.

## Description

### TECHNICAL FIELD

This application relates to the animation effect field, and in particular, to a display method and a related device.

### BACKGROUND

In a process in which a user uses a terminal device (also referred to as an electronic device), the terminal device usually provides better visual experience for the user by using animation effect (that is, an animation). For example, when an element (for example, a View object) displayed on the terminal device changes (for example, the element is deleted or added), the terminal device provides corresponding animation effect. However, the animation effect is not displayed continuously and smoothly at present.

### SUMMARY

Embodiments of this application provide a display method and a related device. In the method, an electronic device may add and cache an element in advance, and set the element to an invisible state. When an element needs to be removed, the electronic device may set an animation type of the element needing to be removed to DISAPPEARING, and set an animation type of a cached element to CHANGE_DISAPPEARING. Therefore, an animation of the cached element can be displayed when a disappearing animation of the element needing to be removed is displayed. In this way, the electronic device can simultaneously display an element removal animation and an element addition animation, to enable the entire animation to be more continuous.

According to a first aspect, this application provides a display method. The method may be applied to an electronic device including a display screen. The method may include: An electronic device may display X elements in a first area of the display screen; and the electronic device removes N elements in the X elements from the first area when a preset condition is satisfied, and moves M new elements to the first area for display, where animation type information of the N elements is first type information, and animation type information of the M elements is second type information; the first type information indicates animation disappearance, and the second type information indicates an animation changed based on the animation disappearance; and X, N, and M are all positive integers, N is less than or equal to X, and M is less than or equal to N.

It may be understood that, in an original animation mechanism, a disappearing animation cannot be simultaneously displayed with an appearing animation. Specifically, an animation that corresponds to animation type information indicating animation disappearance cannot be simultaneously displayed with an animation that corresponds to animation type information indicating animation appearance. In the solution provided in this application, when the preset condition is satisfied, the electronic device may remove one or more visible elements from the first area, and move a new element to the first area for display. In addition, animation type information of a removed visible element is used to indicate animation disappearance, and animation type information of the new element is used to indicate an animation changed based on the animation disappearance. Animations corresponding to the two pieces of the above animation type information may be displayed simultaneously. This means that in the solution provided in this application, an animation of the removed visible element can be simultaneously displayed with an animation of the new element. In this way, the entire animation process is more continuous and smooth.

In some embodiments of this application, the first area may be an area 1 described below. The X elements in the first area may be all elements displayed in the area 1, that is, a total quantity of elements displayed in the area 1 is X.

In some embodiments of this application, the animation type information may be an animation effect type described below.

With reference to the first aspect, in a possible implementation, that the electronic device removes N elements in the X elements from the first area when a preset condition is satisfied may specifically include: The electronic device removes the N elements in the X elements from the first area when the electronic device detects a first operation of a user.

In the scheme provided in this application, the user can select to remove one or more elements in the first area based on a requirement.

In some embodiments of this application, the first operation may be a user operation performed on the N elements. It may be understood that the user operation in this application may be a touch operation, a gesture operation, or a voice control operation, and the like, and is not limited in this application. For example, the first operation may be a long-press/double-click operation performed on the N elements.

With reference to the first aspect, in a possible implementation, the first operation is a sliding operation performed on the first area.

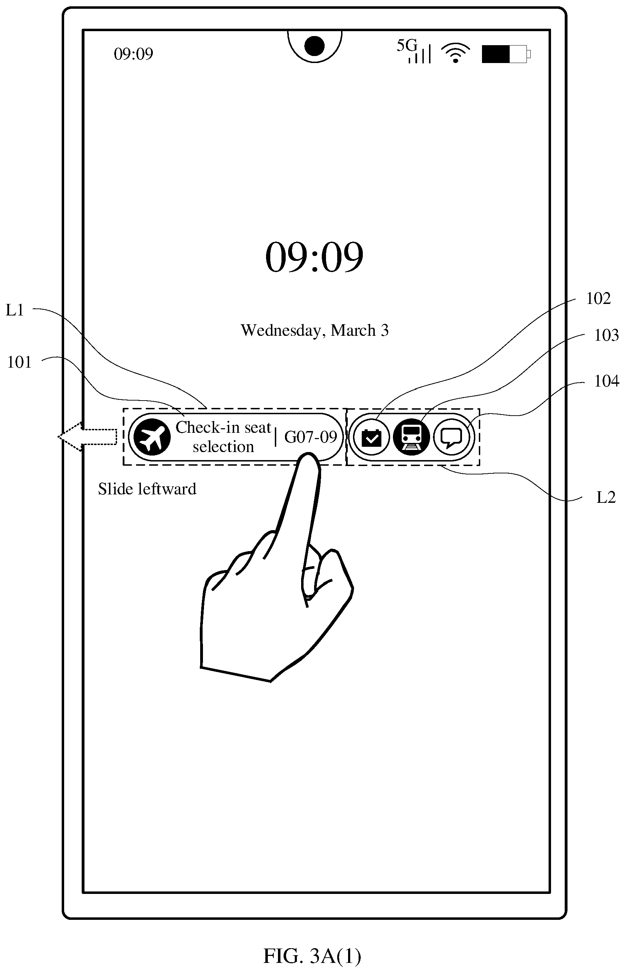

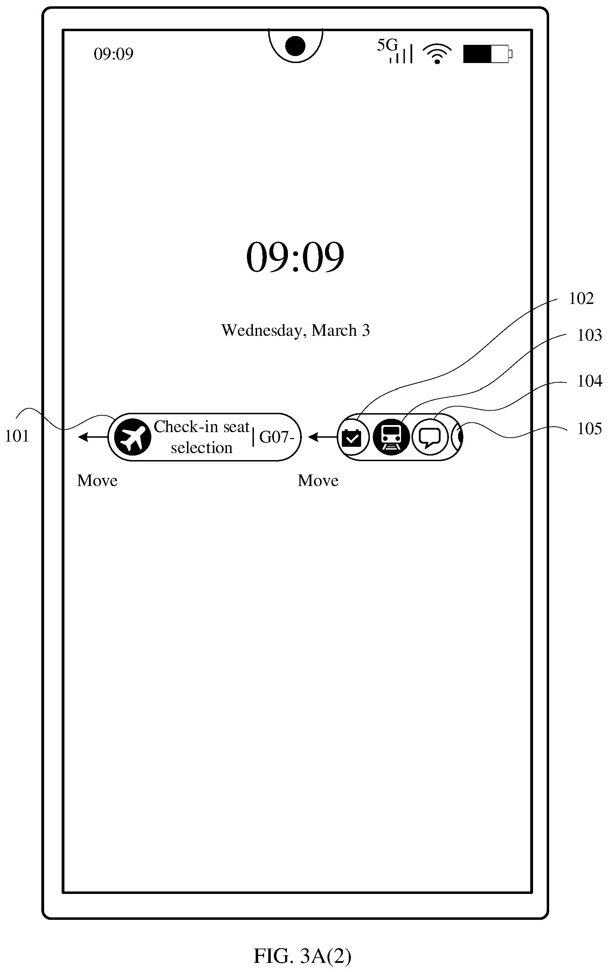

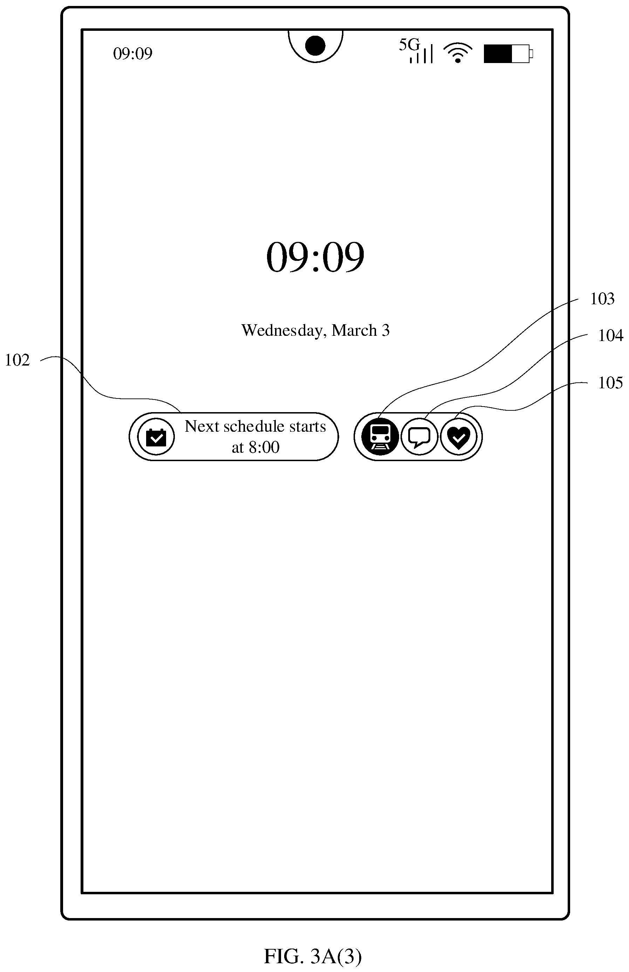

In some embodiments of this application, the first operation is specifically a sliding operation performed on the N elements in the first area. For example, as shown in FIG. 3A(1), the first operation may be a leftward sliding operation performed on a control 101.

In some embodiments of this application, the electronic device may remove, by performing only a specific operation in the first area, the N elements from the first area without performing the sliding operation on the N elements in the first area. For example, N may be equal to X, and the electronic device may detect an up-and-down sliding operation performed on the first area, and in response to the up-and-down sliding operation, the electronic device may remove all X elements from the first area.

With reference to the first aspect, in a possible implementation, that the electronic device removes N elements in the X elements from the first area when a preset condition is satisfied may specifically include: The electronic device removes the N elements in the X elements from the first area when an item corresponding to the N elements is in a target state.

In the solution provided in this application, the electronic device may automatically remove the one or more elements from the first area. Specifically, the electronic device removes the N elements from the first area when the electronic device detects that the item corresponding to the N elements in the X elements displayed in the first area is in the target state.

With reference to the first aspect, in a possible implementation, that an item corresponding to the N elements is in a target state may specifically include: An item corresponding to each element in the N elements is in a completed state, a viewed state, or a canceled state.

In the solution provided in this application, the target state may include the completed state, the viewed state, and the canceled state. When the item that corresponds to each element in the N elements and that is in any state included in the target state, the electronic device may remove the N elements from the first area.

It may be understood that, if the item corresponding to the element is completed, the item corresponding to the element is in the completed state. For example, if a current moment is later than an arrival moment (for example, an arrival moment of a high-speed rail or an arrival moment of an aircraft) of a travel item of the user, it may indicate that the travel item is completed, and the electronic device may remove, from the first area, an element (for example, a control 101 and a control 103) corresponding to the travel item. For another example, if a current moment is later than a processing moment of a schedule item of the user, it may indicate that the schedule item is completed, and the electronic device may remove, from the first area, an element (for example, a control 102) corresponding to the schedule item.

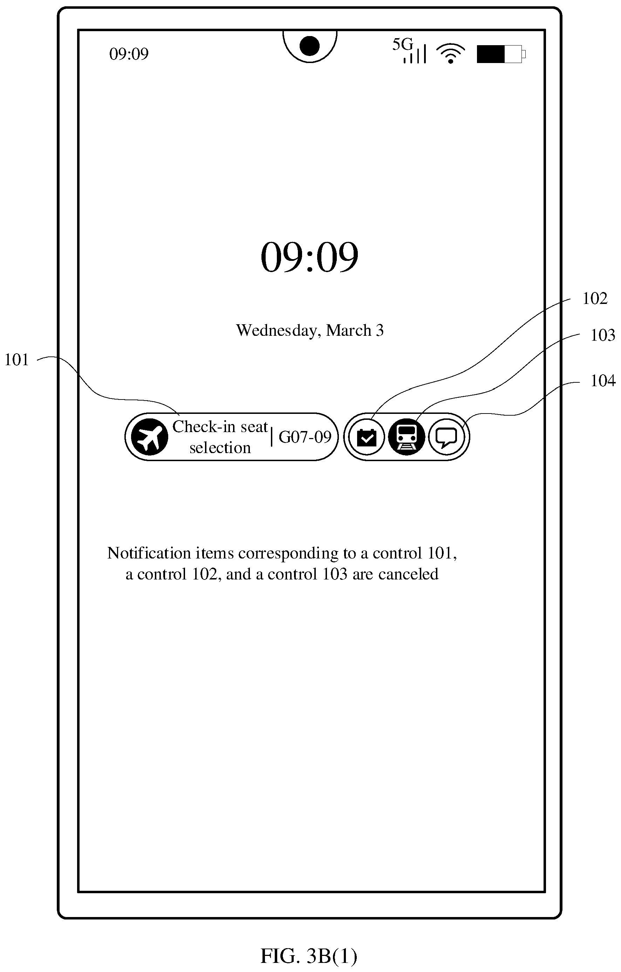

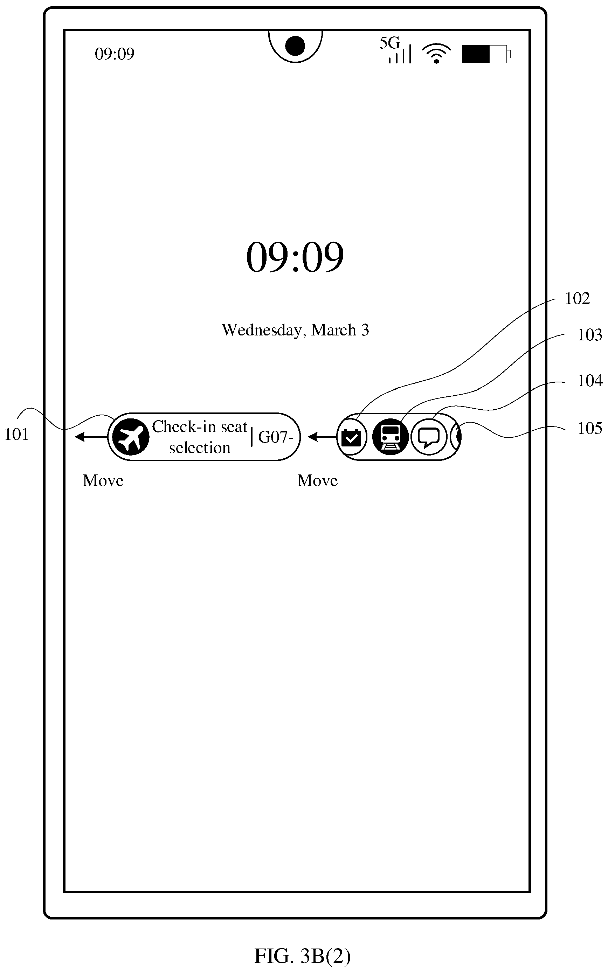

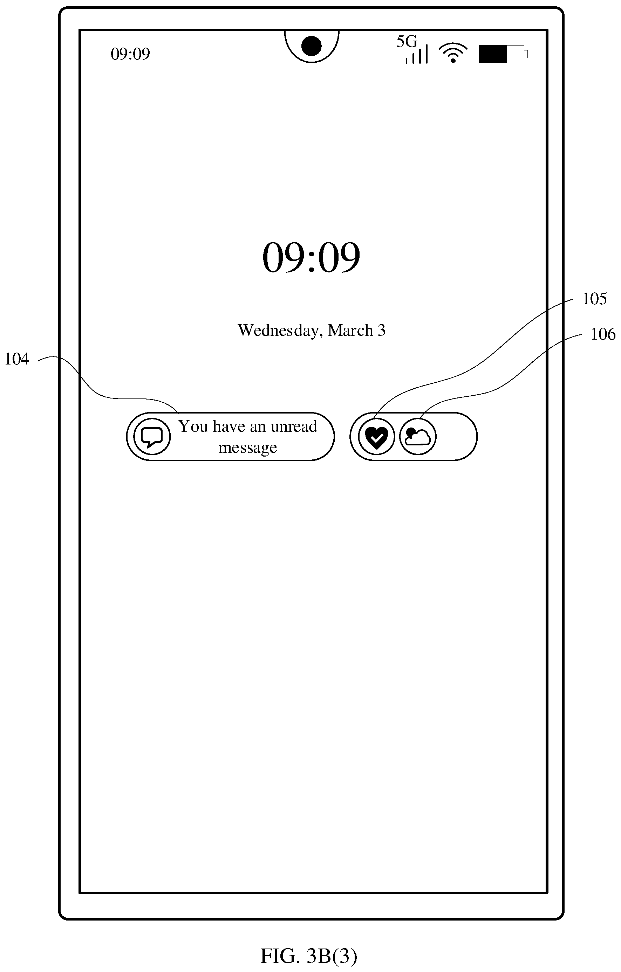

Similarly, if the item corresponding to the element is canceled, the item corresponding to the element is in the canceled state. For this case, refer to a display scenario shown in FIG. 3B(1) to FIG. 3B(3). For example, if the electronic device detects an operation of refunding a ticket (for example, a ticket for a high-speed rail/a plane/a train) by the user, it may indicate that a corresponding travel item is canceled, and the electronic device may remove, from the first area, an element corresponding to the travel item. For another example, if the electronic device detects that the user cancels the schedule item (for example, a schedule item that is added by the user to a calendar application or a schedule item that is automatically generated by the electronic device), it may indicate that a corresponding schedule item is canceled, and the electronic device may remove, from the first area, the element corresponding to the schedule item.

Similarly, if the item corresponding to the element is viewed by the user, the item corresponding to the element is in the viewed state. For example, if the electronic device detects a user operation performed on a to-be-read SMS message in an SMS message application, it may indicate that the to-be-read SMS message is viewed by the user, and the electronic device may remove, from the first area, an element that corresponds to a notification item indicated by the to-be-read SMS message.

With reference to the first aspect, in a possible implementation, an element displayed in the first area is a notification icon, and the notification icon includes at least one of a travel icon, a message icon, a schedule icon, and a weather icon.

In some embodiments of this application, the travel icon may include an icon (for example, the control 101 and the control 103) related to a travel item, the message icon may include an icon (for example, a control 104) related to an SMS message, the schedule icon may include an icon (for example, the control 102) related to a schedule item, and the weather icon may include an icon (such as a control 106) related to a weather condition.

It may be understood that the notification icon may further include another icon (for example, an icon related to health, an icon related to an audio and video playback, a Bluetooth icon, and the like), and is not limited in this application.

It may be understood that the element displayed in the first area may be further other types of icons, pictures, and the like, and is not limited in this application.

With reference to the first aspect, in a possible implementation, X is greater than N. The method may further include: The electronic device moves an element, other than the N elements, in the X elements in the first area when the preset condition is satisfied, where animation type information of the element, other than the N elements, in the X elements is the second type information.

In the solution provided in this application, the animation type information of the element, other than the N elements, in the X elements is the same as animation type information of the M new elements. The electronic device may simultaneously display an animation of the element, other than the N elements, in the X elements and an animation of the M new elements.

It may be understood that, for the related description of simultaneously displaying, refer to the related description in step S105.

With reference to the first aspect, in a possible implementation, the first type information is a disappearing animation DISAPPEARING, and the second type information is an animation generated due to disappearing CHANGE_DISAPPEARING.

In the solution provided in this application, the first type information may be a disappearing animation provided by LayoutTransition, that is, DISAPPEARING, and the second type information may be an animation that is provided by LayoutTransition and that is generated due to disappearing, that is, CHANGE_DISAPPEARING. DISAPPEARING and CHANGE_DISAPPEARING belong to disappearing animation effect. In the original animation mechanism, the electronic device may simultaneously display the disappearing animation effect, that is, the electronic device may simultaneously display the animation effect DISAPPEARING and the animation effect CHANGE_DISAPPEARING.

With reference to the first aspect, in a possible implementation, the electronic device is provided with a first container, the first container includes a first area and a second area, the first area is a visible area, and the second area is used to cache a new element in the first container, and an element in the second area is in an invisible state. Before the electronic device removes the N elements in the X elements from the first area and moves the M new elements to the first area for display, the second area may include the M elements. That the electronic device moves M new elements to the first area for display may specifically include: The electronic device sets the M elements from the invisible state to a visible state, and moves the M elements from the second area to the first area for display.

In the solution provided in this application, the electronic device may add the new element to the container, set the new element to the invisible state, and pre-cache the new element to a user interface. In this way, although the new element is cached in the user interface, the new element is displayed with transparent pixels, and the user cannot see the new element. Once removal of the element in the container is triggered, the electronic device may set the cached new element to the visible state, and simultaneously display an animation in which a to-be-removed element disappears in the first area and an animation in which the new element appears in the first area. That the electronic device displays the animation in which the new element appears in the first area may specifically include: The electronic device moves, based on animation type information set for the electronic device, the new element from a cache area to the visible area in the container.

In some embodiments of this application, the first container may be a container 1 described below. The second area may be an area 2 described below.

With reference to the first aspect, in a possible implementation, that a preset condition is satisfied may further include: X is equal to a first threshold, and the second area includes at least one element.

In the solution provided in this application, elements that may be accommodated in the first area of the first container are limited, and a maximum quantity of elements that may be accommodated in the first area is the first threshold. When a quantity of elements that may be accommodated in the first area reaches an upper limit and at least one cache element exists, the electronic device may remove the N elements in the X elements included in the first area from the first area, and move M elements (that is, the M new elements) cached in the second area to the first area for display.

In some embodiments of this application, the first threshold may be a threshold 1 described below.

With reference to the first aspect, in a possible implementation, the M elements (that is, the M new elements) are M elements that are added earliest to the elements included in the second area.

In the solution provided in this application, the electronic device may display the cached elements in a sequence of adding times. Certainly, the electronic device may further display the cached elements based on another rule. For details, refer to the following description. Details are not described in this application.

With reference to the first aspect, in a possible implementation, when N is less than or equal to a total quantity of elements included in the second area, M is equal to N; or when N is greater than a total quantity of elements included in the second area, M is equal to the total quantity of elements included in the second area.

In the solution provided in this application, if the total quantity of elements included in the second area is not less than a quantity of elements that need to be removed from the first area, the electronic device moves as many cached elements in the second area to the first area as a quantity of elements removed from the first area. If the total quantity of elements included in the second area is less than a quantity of elements that need to be removed from the first area, the electronic device may move all cached elements in the second area to the first area.

With reference to the first aspect, in a possible implementation, before the electronic device removes the N elements in the X elements from the first area and moves the M new elements to the first area for display, the method may further include: When the electronic device detects and responds to a second operation or a new notification item of the user, a quantity of elements included in the first area reaches the first threshold, and a quantity of elements included in the second area does not reach a second threshold, the electronic device may add a first element to the second area, and set the first element to the invisible state.

In the solution provided in this application, a quantity of elements that may be accommodated in the first area and a quantity of elements that may be accommodated in the second area are both limited. When the quantity of elements that may be accommodated in the second area does not reach an upper limit, the electronic device may cache the new element in the second area. Therefore, when subsequent removal of the element in the first area is triggered, disappearing animations may be set for both the new element and the element in the first area, to enable the new element and the visible element in the first area to simultaneously display the animation.

In some embodiments of this application, the second operation may be a user operation of adding a new element to the container 1, for example, long-pressing a visible element in the container 1 and tapping a new element option; and for another example, tapping a new notification option in a settings interface corresponding to the container 1.

In some embodiments of this application, the new notification item may be a notification item that is automatically created by the electronic device based on a user operation (for example, a user operation for a specific application described below). For example, the electronic device detects an operation of creating a new schedule item in the calendar application, and in response to the operation, the electronic device may create a new schedule item. Correspondingly, the electronic device may automatically create a corresponding notification item, and create a corresponding notification icon. For another example, the electronic device may detect a ticket purchase operation in a travel application, and in response to the operation, the electronic device may automatically create a corresponding notification item, and create a corresponding notification icon.

In some embodiments of this application, the second threshold may be a threshold 2 described below.

With reference to the first aspect, in a possible implementation, before the electronic device removes the N elements in the X elements from the first area and moves the M new elements to the first area for display, the method may further include: When the electronic device detects and responds to the second operation or the new notification item of the user, the quantity of elements included in the first area reaches the first threshold, and the quantity of elements included in the second area reaches the second threshold, the electronic device records an attribute of the first element. When the preset condition is satisfied, the method may further include: If the total quantity of elements included in the second area is greater than N, the electronic device adds the first element to the second area, and sets the first element to the invisible state.

In the solutions provided in this application, the quantity of elements that may be accommodated in the first area and the quantity of elements that may be accommodated in the second area are both limited. When the quantity of elements that may be accommodated in the second area reaches the upper limit, the electronic device may first record an attribute of the new element, to cache the new element in the second area in a timely manner after the elements in the second area are reduced.

According to a second aspect, this application provides a display method. The method may be applied to an electronic device including a display screen. In the method, the electronic device may display X elements in a first area of the display screen, remove N elements in the X elements from the first area, and further move M new elements to the first area for display. Animation type information of the N elements is first type information, and animation type information of the M elements is second type information; the first type information indicates animation disappearance, and the second type information indicates an animation changed based on the animation disappearance; and X, N, and M are all positive integers, N is less than or equal to X, and M is less than or equal to N.

In the solution provided in this application, the electronic device may not directly set, to an appearing animation (that is, the animation type information indicating animation appearance), animation type information corresponding to the new element, but may set, to an animation that is changed based on the animation disappearance (that is, the second type information), the animation type information corresponding to the new element. Therefore, an animation type of the new element is the disappearing animation rather than an appearing animation. In this way, a new element addition animation and an element removal animation can be displayed simultaneously, to enable the entire animation process to be more continuous and smoother.

With reference to the second aspect, in a possible implementation, X is greater than N. The method may further include: The electronic device moves an element, other than the N elements, in the X elements in the first area when a preset condition is satisfied, where animation type information of the element, other than the N elements, in the X elements is the second type information.

With reference to the second aspect, in a possible implementation, the first type information is DISAPPEARING, and the second type information is CHANGE_DISAPPEARING.

With reference to the second aspect, in a possible implementation, the electronic device is provided with a first container, the first container includes a first area and a second area, the first area is a visible area, the second area is used to cache a new element in the first container, and an element in the second area is in an invisible state. Before the electronic device removes the N elements in the X elements from the first area and moves the M new elements to the first area for display, the second area may include the M elements. That the electronic device moves the M new elements to the first area for display may specifically include: The electronic device sets the M elements from the invisible state to a visible state, and moves the M elements from the second area to the first area for display.

With reference to the second aspect, in a possible implementation, the M elements (that is, the M new elements) are M elements that are added earliest to the elements included in the second area.

With reference to the second aspect, in a possible implementation, when N is less than or equal to a total quantity of elements included in the second area, M is equal to N; or when N is greater than the total quantity of elements included in the second area, M is equal to the total quantity of elements included in the second area.

With reference to the second aspect, in a possible implementation, before the electronic device removes the N elements in the X elements from the first area and moves the M new elements to the first area for display, the method may further include: When the electronic device detects and responds to a second operation or a new notification item of a user, a quantity of elements included in the first area reaches a first threshold, and a quantity of elements included in the second area does not reach a second threshold, the electronic device may add a first element to the second area, and set the first element to the invisible state.

With reference to the second aspect, in a possible implementation, before the electronic device removes the N elements in the X elements from the first area and moves the M new elements to the first area for display, the method may further include: When the electronic device detects and responds to a second operation or a new notification item of a user, a quantity of elements included in the first area reaches a first threshold, and a quantity of elements included in the second area reaches a second threshold, the electronic device records an attribute of the first element. The method may further include: If the total quantity of elements included in the second area is greater than N, the electronic device may add the first element to the second area, and set the first element to the invisible state.

According to a third aspect, this application provides a display method. The method may be applied to an electronic device including a display screen. In the method, the electronic device may display X elements in a first area of the display screen, and further receive a vertical synchronization (Vertical Synchronization, VSync) signal. The electronic device may perform, in response to the VSync signal, exit display of N removed elements in the first area and new addition display of M new elements in the first area.

In the solution provided in this application, the VSync signal may trigger the electronic device to perform the exit display of the N removed elements in the first area and the new addition display of the M new elements in the first area. This means that the exit display of the N removed elements in the first area and the new addition display of the M new elements in the first area may be simultaneously displayed.

In some embodiments of this application, before receiving the VSync signal, the electronic device may set animation type information of the N elements and the M elements, and measure, lay out, and draw the N elements and the M elements based on the animation type information of the N elements and the M elements, to obtain a drawing result. After receiving the VSync signal, the electronic device may send, in response to the VSync signal, the drawing result to display, to perform the exit display of the N removed elements in the first area and the new addition display of the M new elements in the first area.

It may be understood that, based on a vertical synchronization mechanism used by an image signal processor, the image signal processor performs new frame rendering and updating in a buffer after a VSync signal of a display is sent.

It may be understood that the exit display means the displaying that an animation disappears from the first area, and the new display means the displaying that an animation appears in the first area. It should be noted that an animation type corresponding to the new display of the M new elements does not belong to an appearing animation (that is, APPEARING) described below, but is an animation generated due to disappearing (CHANGE_DISAPPEARING). Only animation effect seen by a user is that the M new elements gradually appear in the first area when displaying.

With reference to the third aspect, in a possible implementation, that the electronic device may perform, in response to the VSync signal, exit display of N removed elements in the first area and new addition display of M new elements in the first area may specifically include: When a preset condition is satisfied, the electronic device may perform, in response to the VSync signal, the exit display of the N removed elements in the first area and the new addition display of the M new elements in the first area.

In the solution provided in this application, when the preset condition is satisfied and the VSync signal is received, the electronic device may simultaneously perform the exit display of the N removed elements in the first area and the new addition display of the M new elements in the first area.

In some embodiments of this application, when the preset condition is satisfied, the electronic device may set the animation type information of the N elements to first type information, and set the animation type information of the M elements to second type information. The electronic device may measure, lay out, and draw the N elements based on the first type information, to obtain a corresponding drawing result, and measure, lay out, and draw the M elements based on the second type information, to obtain a corresponding drawing result. When receiving the VSync signal, the electronic device may perform, based on the drawing result corresponding to the N elements, the displaying of exiting from the first area (that is, disappearing from the first area), and perform, based on the drawing result corresponding to the M elements, the displaying of entering the first area (that is, appearing in the first area).

With reference to the third aspect, in a possible implementation, that a preset condition is satisfied may specifically include: The electronic device detects a first operation of the user.

With reference to the third aspect, in a possible implementation, the first operation is a sliding operation performed on the first area.

With reference to the third aspect, in a possible implementation, that a preset condition is satisfied may specifically include: An item corresponding to the N elements is in a target state.

With reference to the third aspect, in a possible implementation, that an item corresponding to the N elements is in a target state may specifically include: An item corresponding to each element in the N elements is in a completed state, a viewed state, or a canceled state.

With reference to the third aspect, in a possible implementation, an element displayed in the first area is a notification icon, and the notification icon includes at least one of a travel icon, a message icon, a schedule icon, and a weather icon.

With reference to the third aspect, in a possible implementation, X is greater than N. The method may further include: The electronic device may further perform, in response to the VSync signal, mobile display of an element, other than the N elements, in the X elements in the first area.

In the scheme provided in this application, in addition to N elements removed from the first area and the M new elements, after receiving the VSync signal, the electronic device may further perform the mobile display of the element, other than the N elements, in the X elements in the first area.

In some embodiments of this application, animation type information of the element, other than the N elements, in the X elements is the second type information.

With reference to the third aspect, in a possible implementation, the animation type information of the N elements is the first type information, and the animation type information of the M elements is the second type information. The first type information indicates animation disappearance, and the second type information indicates an animation changed based on the animation disappearance.

With reference to the third aspect, in a possible implementation, the first type information is DISAPPEARING, and the second type information is CHANGE_DISAPPEARING.

With reference to the third aspect, in a possible implementation, the electronic device is provided with a first container, the first container includes a first area and a second area, the first area is a visible area, the second area is used to cache a new element in the first container, and an element in the second area is in an invisible state. Before the electronic device performs the exit display of the N removed elements in the first area and the new addition display of the M new elements in the first area, the second area may include the M elements. Before the electronic device performs the new addition display of the M new elements in the first area, the method may further include: The electronic device sets the M elements from the invisible state to a visible state.

With reference to the third aspect, in a possible implementation, that a preset condition is satisfied may further include: X is equal to a first threshold, and the second area includes at least one element.

With reference to the third aspect, in a possible implementation, the M elements (that is, the M new elements) are M elements that are added earliest to the elements included in the second area.

With reference to the third aspect, in a possible implementation, when N is less than or equal to a total quantity of elements included in the second area, M is equal to N; or when N is greater than a total quantity of elements included in the second area, M is equal to the total quantity of elements included in the second area.

With reference to the third aspect, in a possible implementation, before the electronic device removes the N elements in the X elements from the first area, and moves the M new elements to the first area for display, the method may further include: When the electronic device detects and responds to a second operation or a new notification item of a user, a quantity of elements included in the first area reaches a first threshold, and a quantity of elements included in the second area does not reach a second threshold, the electronic device may add a first element to the second area, and set the first element to the invisible state.

With reference to the third aspect, in a possible implementation, before the electronic device removes the N elements in the X elements from the first area, and moves the M new elements to the first area for display, the method may further include: When the electronic device detects and responds to the second operation or the new notification item of the user, the quantity of elements included in the first area reaches the first threshold, and the quantity of elements included in the second area reaches the second threshold, the electronic device records an attribute of the first element. When the preset condition is satisfied, the method may further include: If the total quantity of elements included in the second area is greater than N, the electronic device adds the first element to the second area, and sets the first element to the invisible state.

According to a fourth aspect, this application provides an electronic device. The electronic device includes a display screen, one or more processors, and one or more memories. The display screen may be coupled to the one or more memories and the one or more processors, and the display screen may be configured to display an image. The memory is configured to store computer program code. The computer program code includes computer instructions. The one or more processors invoke the computer instructions to enable the electronic device to perform the method described in any one of the first aspect or the implementations of the first aspect.

According to a fifth aspect, this application provides an electronic device. The electronic device includes a display screen, one or more memories, and one or more processors. The display screen may be coupled to the one or more memories and the one or more processors, and the display screen may be configured to display an image. The memory is configured to store computer program code. The computer program code includes computer instructions. The one or more processors invoke the computer instructions to enable the electronic device to perform the method described in any one of the second aspect or the implementations of the second aspect.

According to a sixth aspect, this application provides an electronic device. The electronic device includes a display screen, one or more memories, and one or more processors. The display screen may be coupled to the one or more memories and the one or more processors, and the display screen is configured to display an image. The memory is configured to store computer program code. The computer program code includes computer instructions. The one or more processors invoke the computer instructions to enable the electronic device to perform the method described in any one of the third aspect or the implementations of the third aspect.

According to a seventh aspect, this application provides a computer storage medium. The computer storage medium includes computer instructions. When the computer instructions are run on an electronic device, the electronic device is enabled to perform the method described in any one of the first aspect or the implementations of the first aspect.

According to an eighth aspect, this application provides a computer storage medium. The computer storage medium includes computer instructions. When the computer instructions are run on an electronic device, the electronic device is enabled to perform the method described in any one of the second aspect or the implementations of the second aspect.

According to a ninth aspect, this application provides a computer storage medium. The computer storage medium includes computer instructions. When the computer instructions are run on an electronic device, the electronic device is enabled to perform the method described in any one of the third aspect or the implementations of the third aspect.

According to a tenth aspect, an embodiment of this application provides a chip. The chip may be applied to an electronic device. The chip includes one or more processors. The processor is configured to invoke computer instructions, to enable the electronic device to perform the method described in any one of the first aspect or the implementations of the first aspect.

According to an eleventh aspect, an embodiment of this application provides a chip. The chip may be applied to an electronic device. The chip includes one or more processors. The processor is configured to invoke computer instructions, to enable the electronic device to perform the method described in any one of the second aspect or the implementations of the second aspect.

According to a twelfth aspect, an embodiment of this application provides a chip. The chip may be applied to an electronic device. The chip includes one or more processors. The processor is configured to invoke computer instructions, to enable the electronic device to perform the method described in any one of the third aspect or the implementations of the third aspect.

In some embodiments of this application, the chip system may be an application processor (Application Processor, AP), or a system on chip (System on Chip, SoC) including the AP. The method according to any one of the first aspect or the implementations of the first aspect may be implemented by one AP, and the method according to any one of the second aspect or the implementations of the second aspect may be implemented by one AP.

In some other embodiments of this application, the chip system may include an AP and another module. The another module may be a modem (Modem, also referred to as a baseband processor).

According to a thirteenth aspect, an embodiment of this application provides a computer program product including instructions. When the computer program product is run on an electronic device, the electronic device is enabled to perform the method described in any one of the first aspect or the implementations of the first aspect.

According to a fourteenth aspect, an embodiment of this application provides a computer program product including instructions. When the computer program product is run on an electronic device, the electronic device is enabled to perform the method described in any one of the second aspect or the implementations of the second aspect.

According to a fifteenth aspect, an embodiment of this application provides a computer program product including instructions. When the computer program product is run on an electronic device, the electronic device is enabled to perform the method described in any one of the third aspect or the implementations of the third aspect.

It may be understood that the electronic device provided in the fourth aspect, the computer storage medium provided in the seventh aspect, the chip provided in the tenth aspect, and the computer program product provided in the thirteenth aspect are all configured to perform the method described in any one of the first aspect or the implementations of the first aspect. Therefore, for beneficial effect that can be achieved by the electronic device, the computer storage medium, the chip, and the computer program product, refer to the beneficial effect in any possible implementation of the first aspect. Details are not described herein again. The electronic device provided in the fifth aspect, the computer storage medium provided in the eighth aspect, the chip provided in the eleventh aspect, and the computer program product provided in the fourteenth aspect are all configured to perform the method described in any one of the second aspect or the implementations of the second aspect. Therefore, for the beneficial effect that can be achieved by the electronic device, the computer storage medium, the chip, and the computer program product, refer to the beneficial effect of any possible implementation of the second aspect. Details are not described herein again. The electronic device provided in the sixth aspect, the computer storage medium provided in the ninth aspect, the chip provided in the twelfth aspect, and the computer program product provided in the fifteenth aspect are all configured to perform the method described in any one of the third aspect or the implementations of the third aspect. Therefore, for beneficial effect that can be achieved by the electronic device, the computer storage medium, the chip, and the computer program product, refer to the beneficial effect in any possible implementation of the third aspect. Details are not described herein again.

### BRIEF DESCRIPTION OF THE DRAWING

FIG. 1A to FIG. 1E are a schematic diagram of an example of a group of user interfaces according to an embodiment of this application;
FIG. 2A and FIG. 2B are a schematic diagram of a group of animation effect according to an embodiment of this application;
FIG. 3A(1) to FIG. 3A(3), FIG. 3B(1) to FIG. 3B(3), and FIG. 3C are a schematic diagram of another group of user interfaces according to an embodiment of this application;
FIG. 4A to FIG. 4C are a schematic diagram of animation effect for a group of icons according to an embodiment of this application;
FIG. 5 is a flowchart of a display method according to an embodiment of this application;
FIG. 6A(1) to FIG. 6A(4) and FIG. 6B(1) to FIG. 6B(3) are a schematic diagram of an example of another group of user interfaces according to an embodiment of this application;
FIG. 7A and FIG. 7B are a schematic diagram of another group of animation effect according to an embodiment of this application;
FIG. 8 is a schematic diagram of a hardware structure of an electronic device according to an embodiment of this application; and
FIG. 9 is a schematic diagram of a software structure of an electronic device according to an embodiment of this application.

### DETAILED DESCRIPTION OF EMBODIMENTS

The following clearly and completely describes technical solutions in embodiments of this application with reference to the accompanying drawings in embodiments of this application. In descriptions of the embodiments of this application, unless otherwise stated, "/" indicates a meaning of "or", for example, A/B may indicate A or B. "And/or" in the specification is merely used to describe an association relationship between associated objects, and indicates that three relationships may exist. For example, "A and/or B" may indicate that there are three cases: Only A exists, both A and B exist, and only B exists. In addition, in the descriptions of the embodiments of this application, "a plurality of" means two or more.

It should be understood that the terms "first", "second", and the like in the specification, claims, and accompanying drawings of this application are used to distinguish between different objects, and are not used to describe a specific sequence. In addition, the terms "include" and "have" and any variations thereof are intended to cover a non-exclusive inclusion. For example, a process, method, system, product, or device that includes a series of steps or units is not limited to a listed step or unit, but optionally further includes an unlisted step or unit, or optionally further includes another step or unit inherent to the process, method, product, or device.

It should be understood that the term "user interface" in the specification, claims, and accompanying drawings of this application is a media interface for interaction and information exchange between an application or an operating system and a user. A commonly used form of the user interface is a graphical user interface (Graphic User Interface, GUI), which refers to a user interface that is related to a computer operation and is displayed graphically. The graphical user interface may be an interface element such as an icon, a window, or a control that is displayed on a display screen of an electronic device. The control may include visible interface elements such as an icon, a button, a menu, a tab, a text box, a dialog box, a status bar, a navigation bar, a widget (Widget), and the like.

An "embodiment" in this application means that specific features, structures, or characteristics described with reference to this embodiment may be included in at least one embodiment of this application. The term appearing at various positions in the specification does not necessarily refer to a same embodiment, or an independent or alternative embodiment mutually exclusive with another embodiment. It is explicitly or implicitly understood by a person skilled in the art that embodiments described in this application may be combined with another embodiment.

An electronic device usually provides better visual experience for a user by using animations. For example, when an element displayed on the electronic device changes (for example, is deleted or added), the electronic device provides a corresponding animation. However, the animation is not displayed continuously. The following uses an example in which a notification icon is updated for description.

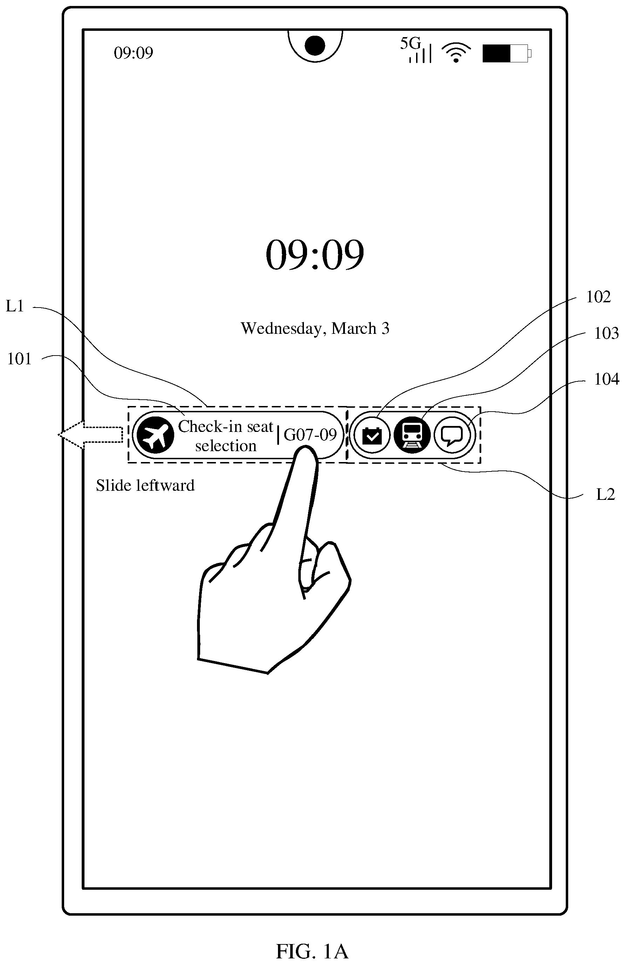

As shown in FIG. 1A, a lock screen interface displayed on a display screen of the electronic device may include a display area L1 and a display area L2. The display area L1 may include a control 101. The display area L2 may include a control 102, a control 103, and a control 104. The control 101 is used to prompt flight information, the control 102 is used to prompt schedule information, the control 103 is used to prompt high-speed rail/train information, and the control 104 is used to prompt an SMS message. In some embodiments of this application, the control 101 and the control 103 are controls generated due to a ticket purchase operation of a user in a travel application. The control 102 is a control generated because the user creates a schedule in a calendar application, or a control generated by the electronic device because another application triggers the creation of a schedule. The control 104 is a control generated because an SMS application receives a new SMS message.

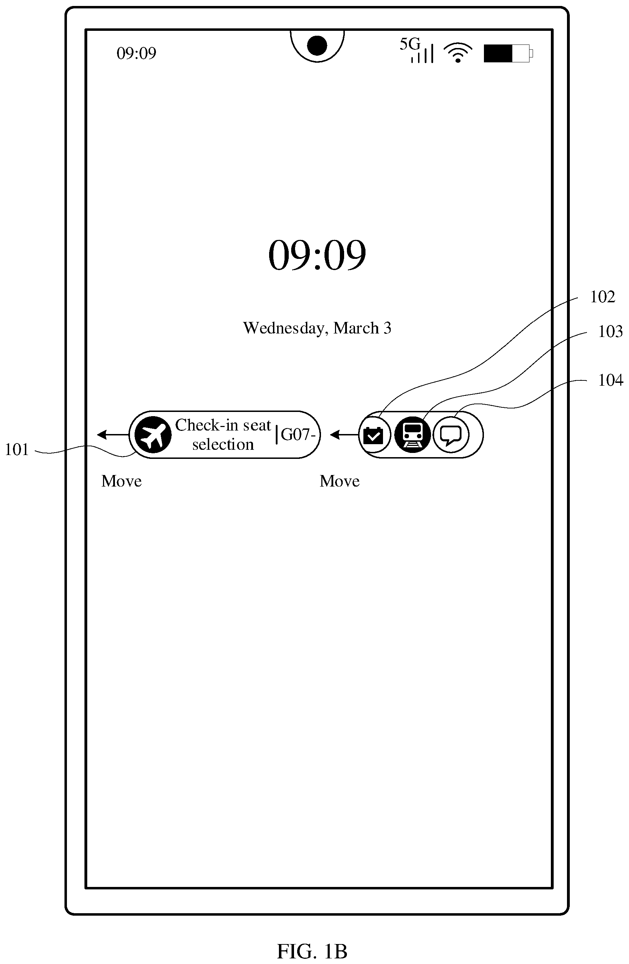

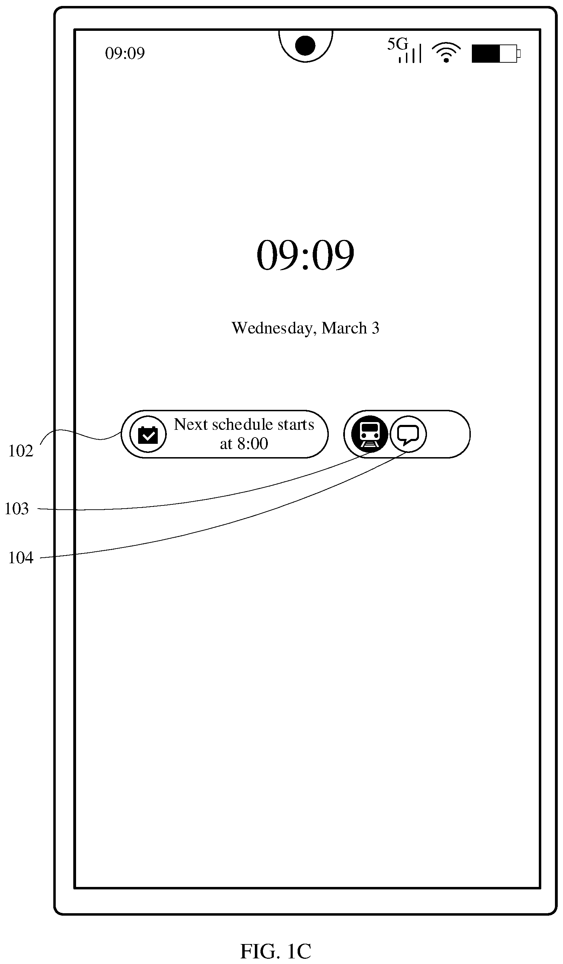

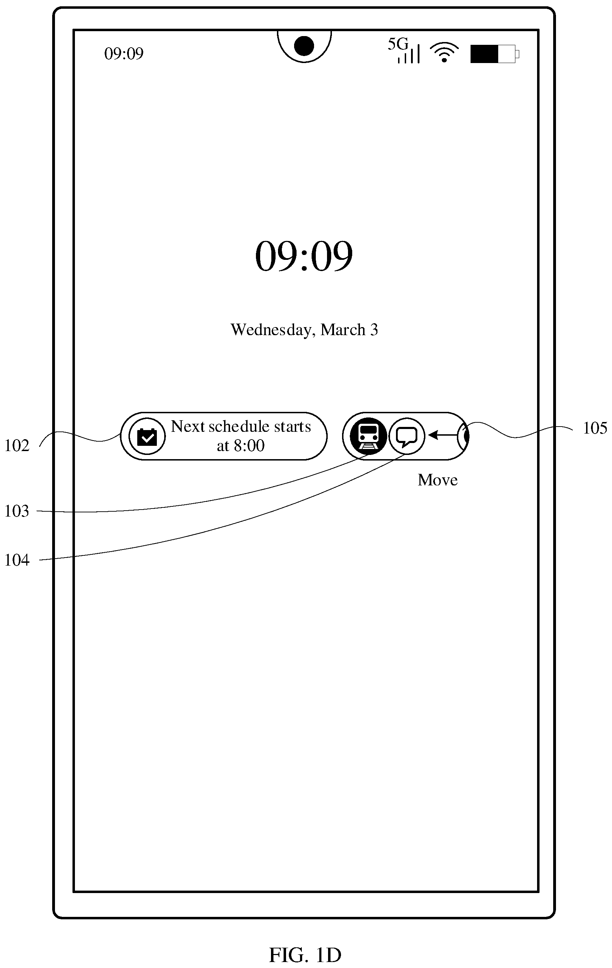

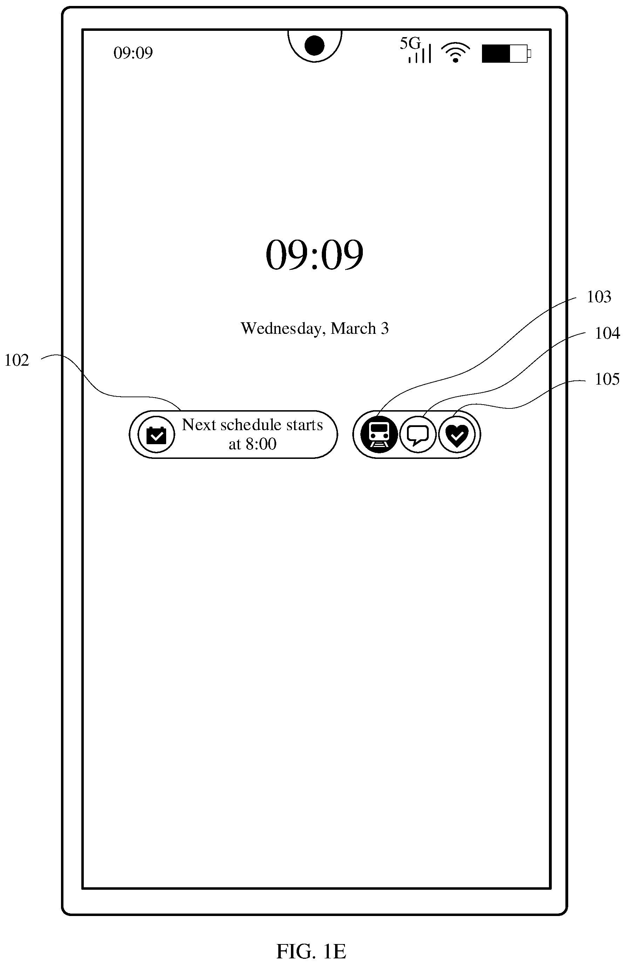

The electronic device may detect a leftward swiping operation performed by the user on the control 101, and in response to this user operation, as shown in FIG. 1B, the electronic device may move the control 101, the control 102, the control 103, and the control 104 to the left until the control 101 disappears. The control 102 moves to an original position of the control 101, the control 103 moves to an original position of the control 102, and the control 104 moves to an original position of the control 103. In this case, the electronic device may display a user interface shown in FIG. 1C. Further, as shown in FIG. 1D, the electronic device may gradually display the control 105, and move the control 105 from a right boundary of the display area L2 to the left. The control 105 does not move once the electronic device moves the control 105 to the original position of the control 104 (as shown in FIG. 1A). In this case, the electronic device may display a user interface shown in FIG. 1E. In other words, the electronic device may first display an animation that the control 101 moves to the left and disappears, and an animation that the control 102, the control 103, and the control 104 move to the left. After the animations of the control 101, the control 102, the control 103, and the control 104 are displayed, the electronic device displays an animation that the control 105 appears and moves to the left. The above disappearing animation and the appearing animation are not displayed simultaneously. As a result, the entire animation process is not continuous and smooth.

It may be understood that each of the control 101, the control 102, the control 103, the control 104, and the control 105 may be considered as an element. The display area L1 and the display area L2 may be understood as containers for arranging elements.

**The following describes reasons why the animation is not continuous.**

First, some terms in the field of animations are described.

### 1. View (View) and ViewGroup (ViewGroup)

View and ViewGroup are the most basic components of a user interface (User Interface, UI), and are foundations for constructing a visible element on a screen (that is, a display). In an Android (Android) operating system (briefly referred to as an Android system), all elements in the user interface are composed of a view object and a ViewGroup object.

View (also referred to as the view object) represents an independent visible element on the screen, and may be simply understood as an object that is drawn on the screen and that interacts with a user. View may be specifically TextView (TextView), ImageView (ImageView), Button (Button), or the like. It may be understood that each of the control 101, the control 102, the control 103, the control 104, and the control 105 that are shown in FIG. 1A to FIG. 1E may be considered as one View (that is, the element).

ViewGroup (also referred to as a ViewGroup object) is a subclass of View, serves as a layout container that is used to store other Views and ViewGroups, and may be used to define layout of an interface. ViewGroup includes direct subclasses such as RelativeLayout (RelativeLayout), FrameLayout (FrameLayout), GridLayout (GridLayout), LinearLayout (LinearLayout), and the like. It may be understood that the display area L1 and the display area L2 in FIG. 1A may be considered as ViewGroups (that is, containers for arranging an element).

### 2. LayoutTransition(LayoutTransition)

LayoutTransition is a helper class for animating Layout in ViewGroup. Specifically, LayoutTransition may be used to provide animation effect for all child Views in ViewGroup when the child view is added, deleted, or moved in ViewGroup.

It may be understood that the animation effect in this application means an animation, that is, continuous display of images in a period of time.

LayoutTransition may provide five forms of animation changes (animation effect types, which may be briefly referred to as animation effect or animation types) for View in ViewGroup:
(1) Appearing animation (APPEARING): animation effect displayed when View is added to a container (that is, ViewGroup).
(2) Animation generated due to appearing (CHANGE_APPEARING): animation effect for other Views in a container displayed when a new View is added to the container.
(3) Disappearing animation (DISAPPEARING): animation effect displayed when View is removed from a container.
(4) Animation generated due to disappearing (CHANGE_DISAPPEARING): animation effect for other Views in a container displayed when a View is removed from a container.
(5) Animation generated due to other layout changes (CHANGING): animation effect for other Views in a container displayed when a position of View in the container changes.

Due to a limitation of a LayoutTransition setting mechanism, when setting animation effect for a layout change in the container by using LayoutTransition, the electronic device cannot simultaneously perform appearing animation effect (including APPEARING and CHANGE_APPEARING) and disappearing animation effect (including DISAPPEARING and CHANGE_DISAPPEARING). This means that if one View needs to be removed from the container and one View needs to be added, the electronic device can only first display the disappearing animation effect, and then display the appearing animation effect after the disappearing animation effect is displayed. As a result, the entire animation is not continuous and smooth.

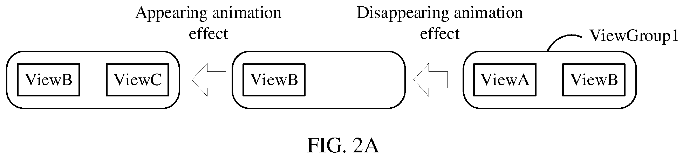

For example, as shown in FIG. 2A, the electronic device may display ViewA and ViewB on the display. ViewA and ViewB are two child Views in ViewGroup1. If the electronic device needs to remove ViewA from ViewGroup 1 and add ViewC to ViewGroup1, the electronic device may first display the disappearing animation effect, and then display the appearing animation effect after the disappearing animation effect is displayed. In other words, when the electronic device displays only ViewB in ViewGroup1, the electronic device starts to display animation effect of adding ViewC.

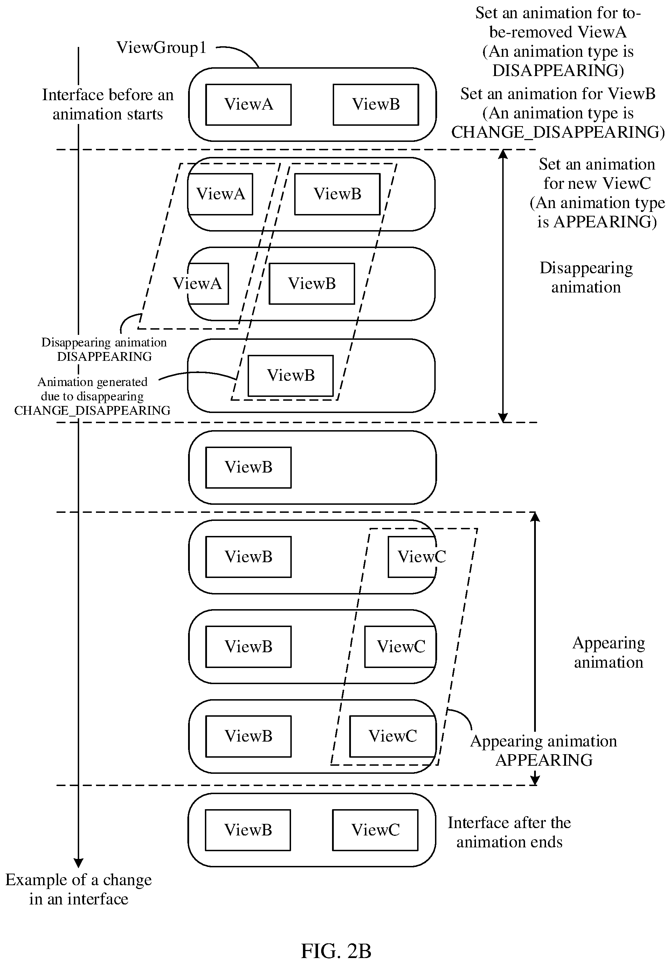

Specifically, as shown in FIG. 2B, if the electronic device needs to remove ViewA from ViewGroup1 and add ViewC to ViewGroup1, the electronic device may first set an animation type of ViewA to DISAPPEARING, set an animation type of ViewB to CHANGE_DISAPPEARING, and set an animation type of ViewC to APPEARING. The electronic device may first perform the disappearing animation effect, that is, display animation effect set for ViewA and ViewB. As shown in FIG. 2B, ViewA and ViewB may move to the left until ViewA moves to a left boundary of ViewGroup1 and completely disappears, and ViewB moves to an original position of ViewA. It may be understood that after the animation effect set for ViewA and ViewB are displayed, the electronic device displays only ViewB in ViewGroup1.

Further, after the disappearing animation effect is displayed, the electronic device may perform the appearing animation effect, that is, display the animation effect set for ViewC. As shown in FIG. 2B, ViewC moves to the left from the right boundary of ViewGroup1 until ViewC completely appears and moves to an original position of ViewB. It may be understood that after the animation effect set for ViewC is displayed, the electronic device may display ViewB and ViewC in ViewGroup1.

In some embodiments of this application, the electronic device may set the animation type of ViewC to APPEARING after the disappearing animation effect is displayed, and perform the appearing animation.

In the foregoing manner, the electronic device cannot display the animation effect set for ViewC when displaying the animation effect set for ViewA and ViewB. As a result, the animation effect in the entire process is not smooth.

Based on the above content, this application provides a display method and a related device. In the method, the electronic device may pre-cache a new View object into the user interface, and set the new View object to an invisible state. If the electronic device detects a removal operation performed on the View object in the container, the electronic device sets an animation type of a to-be-removed View object to DISAPPEARING, sets an animation type of another View object in the container and an animation type of the new View object to CHANGE_DISAPPEARING, and sets the new View object to a visible state. The electronic device may simultaneously perform an animation for each View object, and display corresponding animation effect on the display screen. In the method, the electronic device may simultaneously display an animation effect of removing the View object and an animation effect of adding the View object, without displaying the animation effect of removing the View object first and then displaying the animation effect of removing the View object. Therefore, the entire animation effect is continuous and smooth.

**The following describes an example of a display scenario provided in this application.**

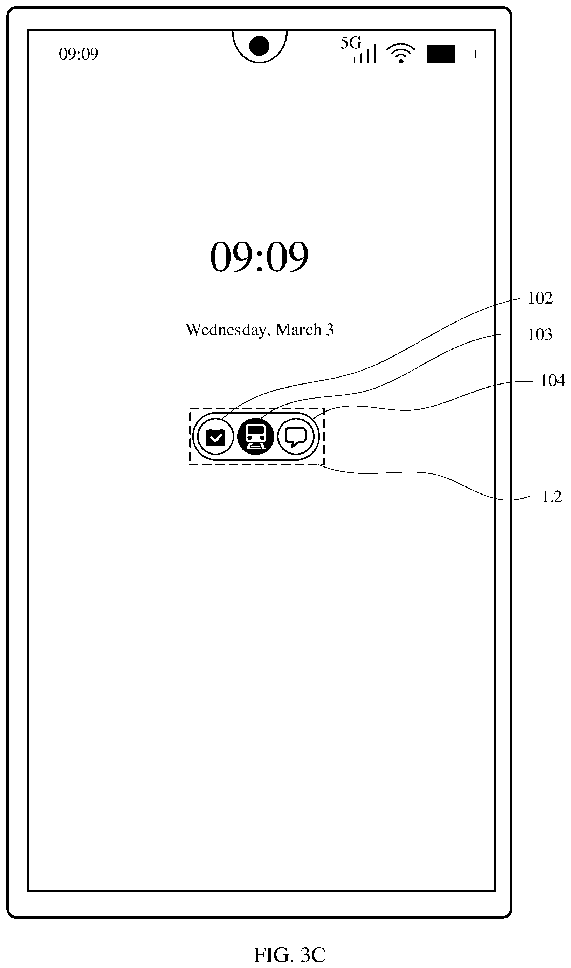

FIG. 3A(1) to FIG. 3A(3), FIG. 3B(1) to FIG. 3B(3), and FIG. 3C are a schematic diagram of a group of user interfaces according to an embodiment of this application.

As shown in FIG. 3A(1), the electronic device may display a control 101, a control 102, a control 103, and a control 104 on a display screen. The control 101 is located in a display area L1, and the control 102, the control 103, and the control 104 are located in a display area L2. It may be understood that, for the related description of the control 101, the control 102, the control 103, and the control 104, refer to the foregoing description. Details are not described in this application.

The electronic device may remove any one or more elements of the control 101, the control 102, the control 103, and the control 104. Correspondingly, the electronic device may simultaneously display animation effect for a removed element and animation effect for another element.

For example, the electronic device may detect a leftward swiping operation performed by a user on the control 101, and in response to this user operation, the electronic device may simultaneously move the control 101, and the control 102, the control 103, and the control 104 in the display area L2 to the left. At a specific moment in the process in which the electronic device moves the control 101, the control 102, the control 103, and the control 104 to the left, the electronic device may display a user interface shown in FIG. 3A(2). As shown in FIG. 3A(2), in the process in which the electronic device moves the control 101, the control 102, the control 103, and the control 104 to the left, the control 101 gradually disappears, the control 102 gradually moves to an original position of the control 101, notification content (for example, "Next schedule starts at 8:00" shown in FIG. 3A(3)) corresponding to the control 102 is displayed, the control 103 gradually moves to an original position of the control 102, the control 104 gradually moves to an original position of the control 103, and a control 105 gradually appears on the display screen and gradually moves to an original position of the control 104.

It may be understood that, the electronic device stops moving the control 101, the control 102, the control 103, and the control 104 until the control 101 disappears, the control 102 moves to the original position of the control 101, the control 103 moves to the original position of the control 102, the control 104 moves to the original position of the control 103, and the control 105 moves to the original position of the control 104. In this case, the electronic device may display a user interface shown in FIG. 3A(3).

Comparing FIG. 1A to FIG. 1E with FIG. 3A(1) to FIG. 3A(3), the animation shown in FIG. 3A(1) to FIG. 3A(3) is more continuous and smoother than the animation shown in FIG. 1A to FIG. 1E.

It may be understood that this application further provides another manner (for example, the user long-presses or double-clicks an element, the user deletes corresponding information in a specific application, or an item corresponding to the element is completed/canceled/viewed) of triggering the electronic device to remove one or more elements from the control 101, the control 102, the control 103, and the control 104. A specific manner of triggering the electronic device to remove the element is not limited in this application.

For example, the user may cancel a flight travel item and a high-speed rail travel item in a travel application, and cancel a schedule item at 8:00 (for example, a schedule arrangement) in a calendar application. Correspondingly, the electronic device may detect user operations performed on the travel application and the calendar application. In this case, the electronic device may determine that items corresponding to the control 101, the control 102, and the control 103 are canceled, thereby triggering the removal of a corresponding control in the user interface shown in FIG. 3B(1). After determining that the items corresponding to the control 101, the control 102, and the control 103 are canceled, the electronic device may remove the control 101, the control 102, and the control 103. Specifically, the electronic device may move the control 101, the control 102, the control 103, and the control 104 to the left. In addition, in the process in which the electronic device moves the control 101, the control 102, the control 103, and the control 104 to the left, as shown in FIG. 3B(2), the control 101, the control 102, the control 103 gradually disappear, the control 104 gradually moves to the original position of the control 101, notification content ("You have an unread message" shown in FIG. 3B(3)) corresponding to the control 104 is displayed, the control 105 and a control 106 gradually appear on the display screen and move along with the leftward movement of the control 104, as shown inFIG. 3B(3), the control 105 finally moves to the original position of the control 102, and the control 106 finally moves to the original position of the control 103.

In some embodiments of this application, as shown in FIG. 3C, the electronic device may display only the display area L2 on the display screen, without displaying the display area L1. That is, the electronic device displays only the control 102, the control 103, and the control 104 on the display screen, without displaying the control 101 on the display screen.

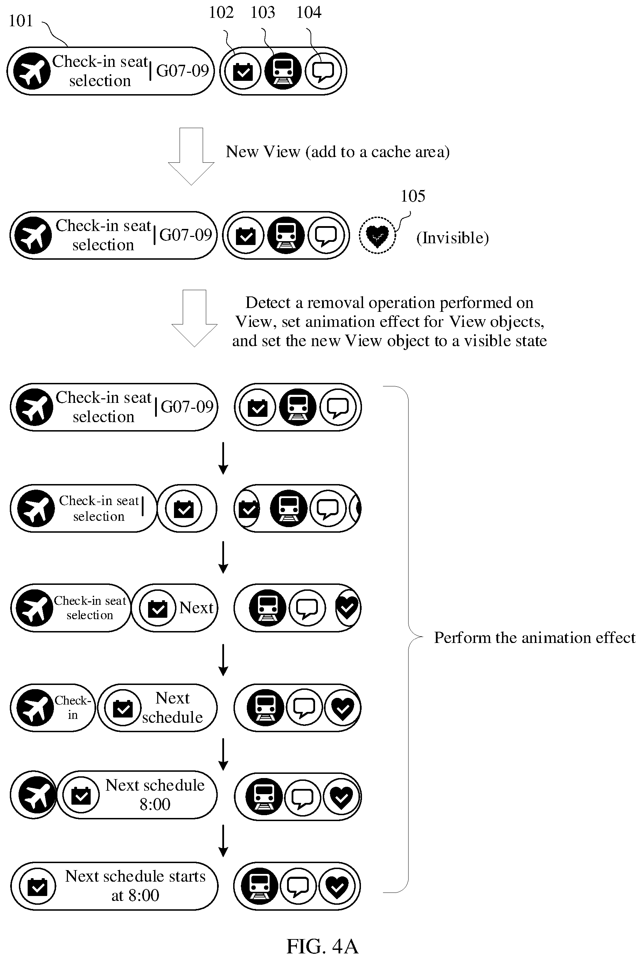

The following describes in detail changes in controls in the display area L1 and the display area L2 with reference to FIG. 4A to FIG. 4C.

### 1. Remove one View from a container

As shown in FIG. 4A, the electronic device may detect an operation of adding a new View, and in response to this operation, the electronic device may measure, lay out, and draw the new View, that is, the control 105, add the new View to a cache area in the container, and set the new View to an invisible state. In other words, although the electronic device draws and displays the control 105, the user cannot see the control 105 on the display screen.

The electronic device may detect a removal operation performed on one View (for example, the control 101) in the container, and in response to this operation, the electronic device may set animation effect for the View (for example, the control 101, the control 102, the control 103, the control 104, and the control 105) in the container, and set the new View (for example, the control 105) to a visible state. As shown in FIG. 4A, the electronic device may simultaneously perform animation effect for the control 101, the control 102, the control 103, the control 104, and the control 105.

In some embodiments of this application, whether the container includes a cached element does not affect the displaying of a visible element in the container. For example, as shown in FIG. 4A, before and after the electronic device adds and caches the control 105 to the container, the visible element (for example, the control 101, the control 102, the control 103, and the control 104) in the container displayed by the electronic device do not change. Specifically, content displayed by the visible element in the container does not change.

In some embodiments of this application, whether the container includes a cached element affects the displaying of a visible element in the container. In one possible implementation, if the container includes a cache element, that is, a total quantity of Views in the container is greater than a total quantity of visible Views in the container, the electronic device may change display content of a visible element last added to the container.

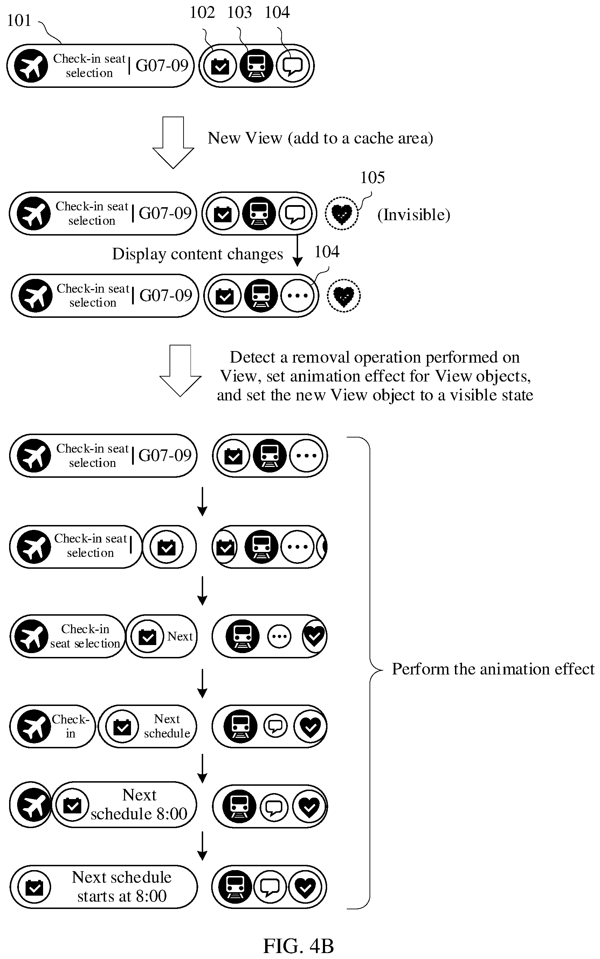

For example, as shown in FIG. 4B, after the electronic device adds the new View to the cache area in the container, the total quantity of Views in the container is 5, but the electronic device displays only four visible Views (the control 101, the control 102, the control 103, and the control 104). In this case, the electronic device may change the display content of the visible View (for example, the control 104) last added to the container. Specifically, as shown in FIG. 4B, the display content of the control 104 is changed from an icon with a message box to an icon with an ellipsis. The electronic device may detect the removal operation performed on the View (for example, the control 101) in the container, and in response to this operation, the electronic device may set the animation effect for the View (for example, the control 101, the control 102, the control 103, the control 104, and the control 105) in the container, and set the new View (for example, the control 105) to the visible state. As shown in FIG. 4B, the electronic device may simultaneously perform the animation effect for the control 101, the control 102, the control 103, the control 104, and the control 105. In addition, after the electronic device removes the View from the container, if the total quantity of Views in the container is equal to the quantity of visible Views, the electronic device may restore the display content to original display content in the process of performing the animation effect for the control 104, that is, restore the display content of the control 104 from the icon with the ellipsis to the icon with the message box.

### 2. Remove a plurality of Views from the container

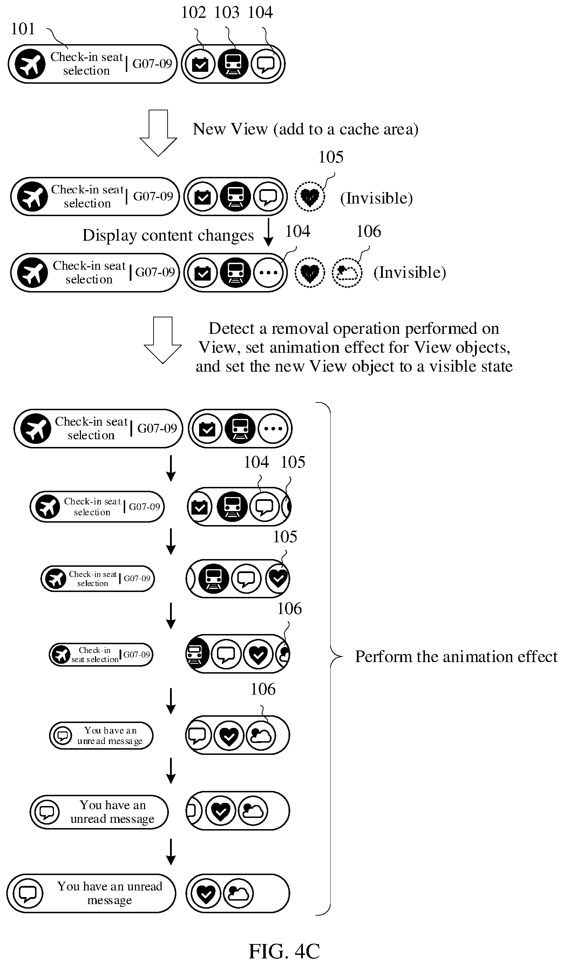

After adding the control 105 to the cache area in the container and setting the control 105 to the invisible state, the electronic device may continuously add a View. As shown in FIG. 4C, the electronic device may continuously add the View. Similar to the operation performed on the control 105, the electronic device may specifically measure, lay out, and draw the continuously added View, that is, the control 106, add the continuously added View to the cache area in the container, and set the continuously added View to the invisible state. Similar to the control 105, although the electronic device draws and displays the control 106, the user cannot see the control 106 on the display screen.

The electronic device may detect a removal operation performed on a plurality of Views (for example, the control 101, the control 102, and the control 103,) in the container, and in response to this operation, the electronic device may set the animation effect for the View (for example, the control 101, the control 102, the control 103, the control 104, the control 105, and the control 106) in the container, and set the new View (for example, the control 105 and the control 106) to the visible state. As shown in FIG. 4C, the electronic device may simultaneously perform the animation effect for the control 101, the control 102, the control 103, the control 104, the control 105, and the control 106.

It may be understood that the specific content and the specific form of the animation effect may be set based on an actual need. This is not limited in this application. For example, animation effect for the removed View may be folding and then disappearing, as shown in FIG. 4A and FIG. 4B, or may be zooming out and then disappearing, as shown in FIG. 4C. For another example, animation effect for View, other than the removed View, in the container may be moving to the left.

**The following describes a display method provided in an embodiment of this application.**

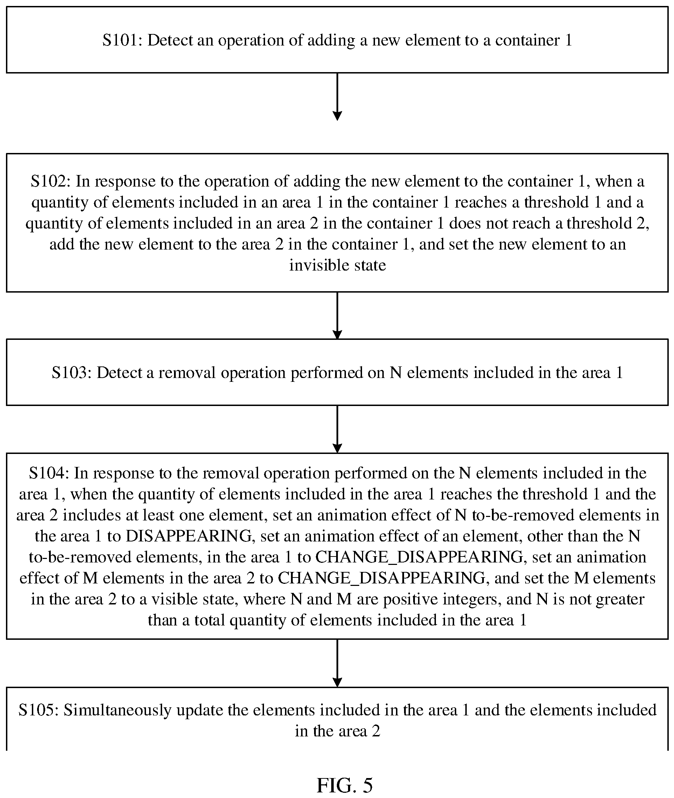

Refer to FIG. 5. FIG. 5 provides a display method according to an embodiment of this application. The method may be applied to an electronic device. The method may specifically include but is not limited to the following steps.

S101: Detect an operation of adding a new element to a container 1.

It may be understood that the container 1 may mean a display area of a user interface used to lay out elements. In some embodiments of this application, the container 1 may be a ViewGroup (for example, ViewGroup 1), and the element may be a View. The element in the container 1 may be understood as a child View in the container 1, and the container 1 may be understood as a parent container of the element in the container 1.

It may be understood that a layout rule of the container 1 may be set based on an actual need. This is not limited in this application. The layout rule may include a layout form, a layout spacing, and the like. The layout form may include a relative layout, a linear layout, a frame layout, a grid layout, and the like. The layout spacing may include a spacing between elements. For example, the relative layout may be used in the container 1, and a distance between an element and a surrounding element in the container 1 may be 10pd. pd means density independent loudness, is an abstract unit independent of screen density, and is usually used to define view dimensions (for example, a width, a height, a spacing, and the like).

It should be noted that content displayed by the container 1 is not specifically limited in this application. In some embodiments of this application, the container 1 is used to display a notification icon and a corresponding notification item. For example, the container 1 may include a display area L2 shown in FIG. 3A(1) to FIG. 3A(3). For example, the container 1 may include a display area L1 and a display area L2 shown in FIG. 3A(1) to FIG. 3A(3).

In some embodiments of this application, the electronic device may detect a user operation for a specific application, and in response to the user operation, the electronic device may add a new element to the container 1. That is, the electronic device may remind, by displaying content (for example, a to-be-processed item, a travel schedule, a weather reminder, and a health reminder) related to the specific application on a display screen, a user to take care of a specific item of the specific application. It may be understood that the specific application may be set based on an actual need. This is not limited in this application.

For example, the electronic device detects an operation of creating a new schedule item in a calendar application, and in response to the operation, the electronic device may create a new schedule item. Correspondingly, after the creation of the new schedule is completed, the electronic device may add, to the container 1, a new element corresponding to a schedule, for example, a notification icon corresponding to the creation of the new schedule item. For another example, the electronic device may detect a ticket purchase operation in a travel application, and in response to the operation, the electronic device may add, to the container 1, a new element corresponding to the travel item, such as a notification icon corresponding to the travel item.

In some embodiments of this application, the user may add a new element to the container 1. In a possible implementation, the electronic device detects a user operation (for example, long-pressing a visible element in the container 1 and tapping a new element option) performed on the container 1, and in response to the user operation, the electronic device may add a new element to the container 1. In another possible implementation, the electronic device may detect a user operation (for example, tapping a new notification option in a settings interface corresponding to the container 1) performed on a corresponding settings option in the settings interface corresponding to the container 1, and in response to the user operation, the electronic device may add a new element to the container 1.

S102: In response to the operation of adding the new element to the container 1, when a quantity of elements included in an area 1 in the container 1 reaches a threshold 1 and a quantity of elements included in an area 2 in the container 1 does not reach the threshold 2, add the new element to the area 2 in the container 1, and set the new element to an invisible state.

It may be understood that, after the electronic device automatically triggers the addition of the new element to the container 1 or the user triggers the electronic device to add the new element to the container 1, the electronic device may determine whether the quantity of elements included in the area 1 in the container 1 reaches the threshold 1, and determine whether the quantity of elements included in the area 2 in the container 1 reaches the threshold 2. When the quantity of elements included in the area 1 reaches the threshold 1 and the quantity of elements included in the area 2 does not reach the threshold 2, the electronic device may add the new element to the area 2 in the container 1, and set the new element to the invisible state.

It may be understood that the container 1 may include the area 1 and the area 2. The area 1 may be configured to lay out a visible element. The area 2 may be configured to cache the new element (only a new element added to the container 1), and all elements cached in the area 2 are in the invisible state. That is, an element laid out in the area 1 is in a visible state, and an element laid out in the area 2 is in the invisible state. It may be understood that the area 2 in the container 1 may be the cache area in the container described above.

For example, the area 1 in the container 1 may include the display area L2. In this case, the control 102, the control 103, and the control 104 may be understood as the elements in the area 1. For example, the area 1 in the container 1 may include the display area L1 and the display area L2. In this case, the control 101, the control 102, the control 103, and the control 104 may be understood as the elements in the area 1.

It may be understood that a size and a position of the container 1, and a size and a position of the area 1, and a size and a position of the area 2 may be set based on an actual need. This is not limited in this application.

It may be understood that a quantity of elements laid out in the area 1 is limited. The threshold 1 may be understood as a maximum quantity of elements that may be laid out in the area 1 in the container 1, or may be understood as a maximum quantity of elements that may be displayed in the container 1. The threshold 1 is a positive integer, and a specific value of the threshold 1 may be set based on an actual need. This is not limited in this application. For example, the threshold 1 may be 2. That is, the maximum quantity of elements that may be laid out in the area 1 may be 2. For another example, the threshold 1 may be 3.

Similarly, a quantity of elements that may be laid in the area 2 is limited. In this case, after detecting the operation of adding the new element to the container 1, the electronic device needs to determine whether the quantity of elements included in the area 1 reaches the threshold 1, and needs to determine whether the quantity of elements included in the area 2 reaches the threshold 2. The threshold 2 may be understood as a maximum quantity of elements that may be laid out in the area 2, or may be understood as a maximum quantity of elements that may be cached in the container 1. It may be understood that the threshold 2 is a positive integer, and a specific value of the threshold 2 may be set based on an actual need. This is not limited in this application. For example, the threshold 2 may be 2. That is, the maximum quantity of elements that may be laid out in the area 2 may be 2. For another example, the threshold 2 may be 3.

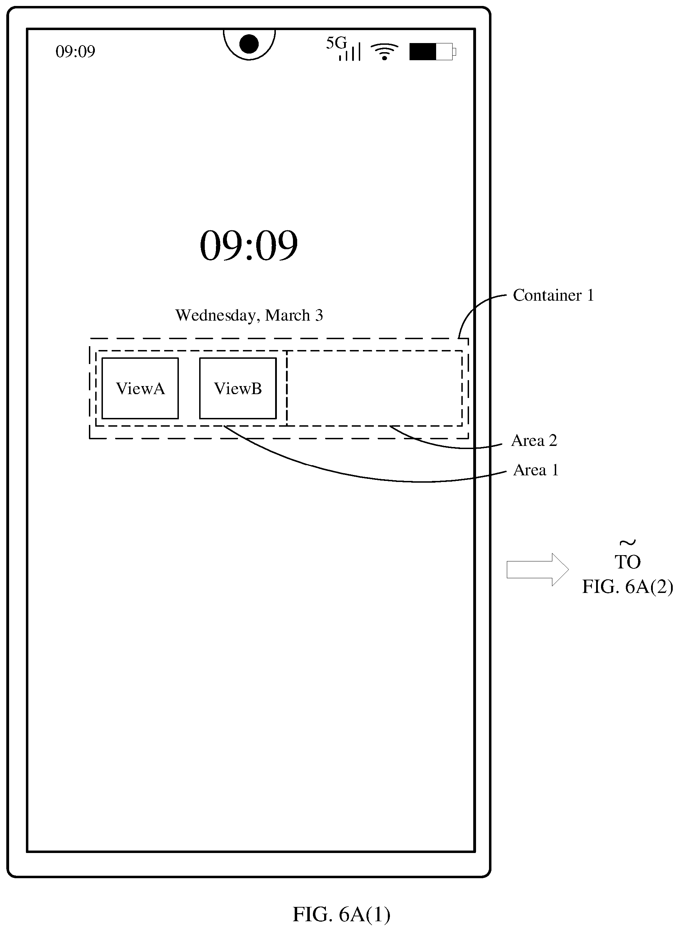

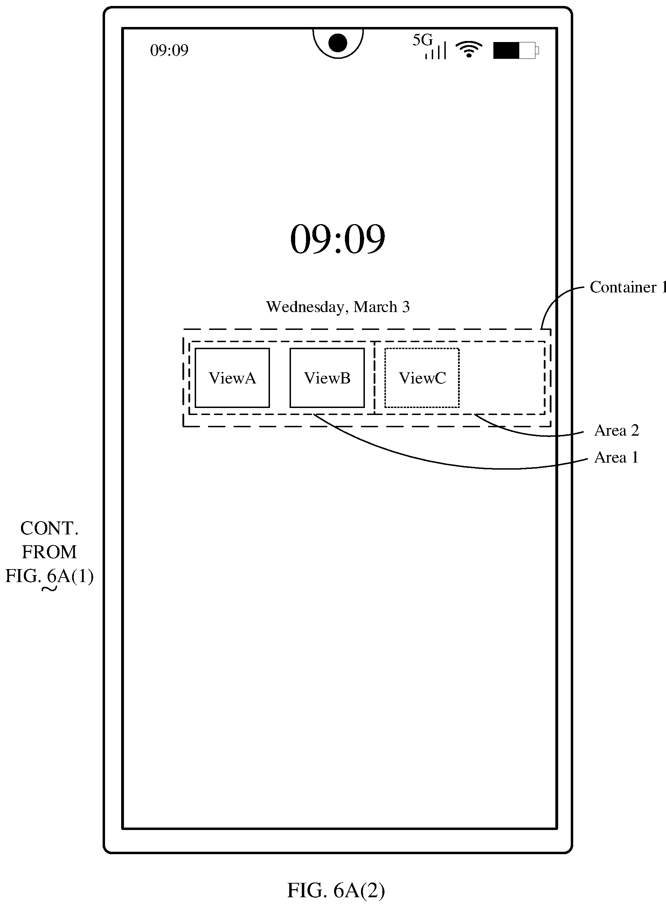

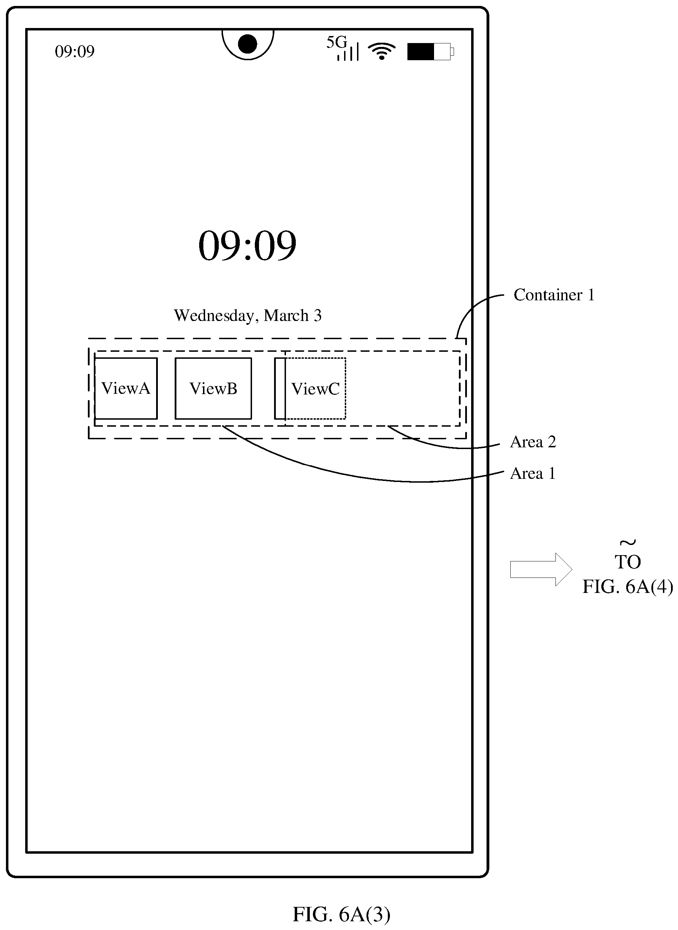

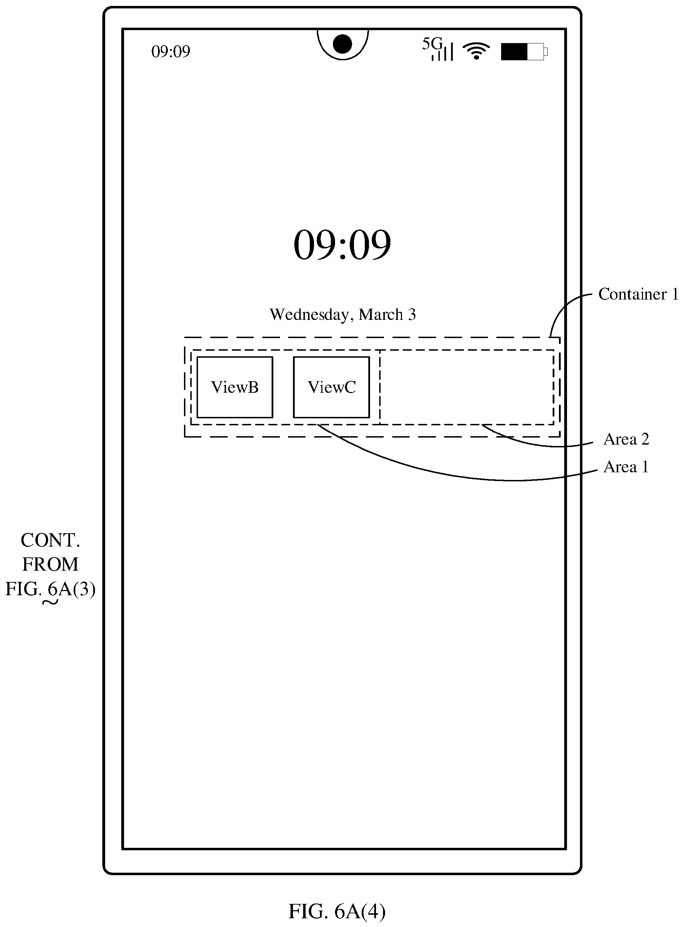

For example, the maximum quantity of elements that may be laid out in the area 1 in the container 1 may be 2 (that is, the threshold 1 is 2), and the maximum quantity of elements that may be laid out in the area 2 in the container 1 may be 2 (that is, the threshold 2 is 2). As shown in FIG. 6A(1), the area 1 may include ViewA and ViewB, reaching a maximum quantity of elements that are laid out in the area 1, and no element is laid out in the area 2. In this case, because the quantity of elements included in the area 1 reaches the threshold 1 and no element is cached in the area 2, if the electronic device detects an operation of adding ViewC to the container 1, the electronic device may add, in response to the operation, ViewC to the area 2 in the container 1, and set ViewC to the invisible state. As shown in FIG. 6A(2), the area 1 includes ViewA and ViewB, and area 2 includes ViewC. However, for the user, ViewA and ViewB displayed by the electronic device in the area 1 are visible, and ViewC displayed by the electronic device in the area 2 is invisible. It may be understood that in this case, because the quantity of elements cached in the area 2 does not reach the threshold 2, if the electronic device continuously detects an operation of adding ViewD to the container 1, the electronic device may continuously add ViewD to the area 2 in the container 1, and set ViewD to the invisible state.

It may be understood that the electronic device may display the View on the display screen based on a View-based drawing mechanism. The entire drawing mechanism may include a measurement phase, a layout phase, and a drawing phase. In the measurement phase, the electronic device may calculate a size of each View in a view hierarchy. In the layout phase, the electronic device may determine a layout position of the View based on the size of the View obtained in the measurement phase and a layout rule of the parent container, and determine an accurate position and size of each View on the display screen. In the drawing phase, the electronic device may perform a drawing operation, and display a drawing result on the display screen. It should be noted that the user interface includes Views. Therefore, the electronic device may draw the entire user interface by using the drawing mechanism, and display the entire user interface on the display screen.

In some embodiments of this application, that the electronic device adds a new element to the area 2 in the container 1 may specifically include: The electronic device may set the new element to a child View in the container 1, measure a size of the new element, and determine a layout position of the new element based on the layout rule of the container 1. Specifically, because the quantity of elements included in the area 1 in the container 1 reaches the threshold 1 and the quantity of elements included in the area 2 in the container 1 does not reach the threshold 2, the electronic device may determine a specific layout position of the new element in the area 2 based on a quantity of elements (that is, cached elements) that are already laid out in the area 2, perform a drawing operation on the new element, and display a drawing result on the display screen.

In some embodiments of this application, the electronic device may enable the new element to be in the invisible state by setting an alpha of the new element. For example, the electronic device may set an alpha value corresponding to the new element to 0, that is, set the alpha of the new element to 100%. This means that, after the electronic device sets the alpha value of the new element to 0, in the drawing phase, the electronic device renders transparent pixels when drawing the new element. Although a rendering result is displayed subsequently, the user does not see the new element on the display screen.

In some embodiments of this application, the electronic device may specifically set visibility of the new element through a setVisibility method. Specifically, the electronic device may set the new element to the invisible state by invoking the setVisibility method and setting a parameter to View.INVISIBLE (the parameter may be further replaced with a constant 4 during use). It may be understood that three parameters are used in the setVisibility method, that is, View.VISIBLE (a corresponding constant is 0), View.INVISIBLE (a corresponding constant is 4), and View.GONE (a corresponding constant is 8). View.VISIBLE may be used to set the View in the visible state, and the View occupies allocated layout space; View.INVISIBLE may be used to set the View in the invisible state, and the View occupies allocated layout space; and View.GONE may be used to set the View in the invisible state, and the View does not occupy allocated layout space.

In some embodiments of this application, if the quantity of elements included in the area 2 in the container 1 reaches the threshold 2, the electronic device may record related information (for example, the size, the position, the alpha, and the like) of the new element after detecting the operation of adding the new element to the container 1. Therefore, after the element in the container 1 is removed subsequently, the new element may be cached based on the related information of the new element. Once the element in the container 1 is removed, the electronic device may determine the size of the new element based on the related information of the new element, determine the layout position of the new element based on the size and a layout rule of a parent container (for example, the container 1) of the new element, thereby determining the accurate position and size of each View on the display screen. Then, the electronic device may perform the drawing operation based on the alpha and other attributes of the new element, and display the drawing results on the display screen.

S103: Detect a removal operation performed on N elements included in the area 1.

In some embodiments of this application, the electronic device may automatically remove an element (including the element in the area 1 and the element in the area 2) from the container 1. In a possible implementation, after an item corresponding to the element has been completed (finished), the electronic device may automatically remove the element. For example, once the electronic device detects that a current moment is later than an arrival moment (for example, an arrival moment of a high-speed rail or an arrival moment of an aircraft) of a travel item of the user, the electronic device may remove, from the container 1, an element corresponding to the travel item. For another example, once the electronic device detects that a current moment is later than a processing moment of a schedule item, the electronic device may remove, from the container 1, the element corresponding to the schedule item. As shown in FIG. 3A(1) to FIG. 3A(3), after a schedule starting at 8:00 is completed, the electronic device may remove the control 102. In a possible implementation, after the item corresponding to the element is canceled, the electronic device may automatically remove the element. For example, once the electronic device detects that the user conceals the travel item (for example, detects an operation of refunding a ticket), the electronic device may remove, from the container 1, an element corresponding to the travel item. For another example, once the electronic device detects that the user cancels the schedule item, the electronic device may remove, from the container 1, an element corresponding to the schedule item. In a possible implementation, after the item corresponding to the element is viewed, the electronic device may automatically remove the element. For example, once the electronic device detects that the user views a to-be-read SMS message, the electronic device may remove, from the container 1, an element corresponding to the to-be-read SMS message.

In some embodiments of this application, the electronic device may detect a user operation for a specific application, and in response to the user operation, the electronic device may remove the element from the container 1. For example, the user may cancel a schedule item in the calendar application (for example, a schedule at 8:00 a.m.). Correspondingly, the electronic device may detect a user operation of canceling the schedule item in the calendar application, and in response to the user operation, the electronic device may delete the schedule item, and remove, from the container 1, an element (for example, the control 102) corresponding to the schedule item. For another example, the user may refund a purchased air ticket via the travel application. Correspondingly, the electronic device may detect the operation of refunding a ticket in the travel application, and in response to this operation, the electronic device may refund the ticket, and remove, from the container 1, an element (for example, the control 101) corresponding to the travel item.

In some embodiments of this application, the user may manually remove the element included in the area 1 in the container 1. For example, the user may remove the element by swiping the element included in the area 1 in the container 1. Specifically, in a possible implementation, the electronic device may detect a leftward swiping operation performed on the element included in the area 1 in container 1, and in response to this operation, the electronic device may remove the element from the container 1. For example, as shown in FIG. 3A(1) to FIG. 3A(3), the electronic device may detect a leftward swiping operation performed on the control 101, and in response to this operation, the electronic device may remove the control 101.

S104: In response to the removal operation performed on the N elements included in the area 1, when the quantity of elements included in the area 1 reaches the threshold 1 and the area 2 includes at least one element, set animation effect for N to-be-removed elements in the area 1 to DISAPPEARING, set animation effect for an element, other than the N to-be-removed elements, in the area 1 to CHANGE_DISAPPEARING, set animation effect for M elements in the area 2 to CHANGE_DISAPPEARING, and set the M elements in the area 2 to the visible state. N and M are positive integers. N is not greater than a total quantity of elements included in the area 1.

In some embodiments of this application, after detecting the removal operation performed on the N elements included in the area 1 in the container 1, the electronic device may determine whether the quantity of elements included in the area 1 reaches the threshold 1, and determine whether the area 2 includes at least one element.

When the quantity of elements included in the area 1 reaches the threshold 1 and the area 2 includes at least one element, in response to the removal operation performed on the N elements in the area 1, the electronic device may set a corresponding animation for each element in the area 1 (including the N to-be-removed elements in the area 1), and set a corresponding animation for the M elements in the area 2. Specifically, the electronic device may set the animation effect for the N to-be-removed elements in the area 1 to DISAPPEARING, set the animation effect for the element, other than the N to-be-removed elements, in the area 1 to CHANGE_DISAPPEARING, set the animation effect for the M elements in the area 2 to CHANGE_DISAPPEARING, and set the M elements in the area 2 from the invisible state to the visible state.

It should be noted that when the quantity of elements included in the area 2 is 0, regardless of whether the quantity of elements included in the area 1 reaches the threshold 1, the electronic device may set the animation effect for the N to-be-removed elements in the area 1 to DISAPPEARING, and set the animation effect for the element, other than the N to-be-removed elements, in the area 1 to CHANGE_DISAPPEARING.

Specifically, when the quantity of elements included in the area 1 reaches the threshold 1 and the quantity of elements included in the area 2 is 0, the electronic device sets the animation effect for the N to-be-removed elements in the area 1 to DISAPPEARING, and sets the animation effect for the element, other than the N to-be-removed elements, in the area 1 to CHANGE_DISAPPEARING.

It may be understood that M is the smallest one of a total quantity of elements included in the area 2 and N, that is, M = min {the total quantity of elements included in the area 2, N}. Specifically, when the total quantity of elements included in the area 2 is greater than or equal to N, M is equal to N; and when the total quantity of elements included in the area 2 is less than N, M is the total quantity of elements included in the area 2. For example, as shown in FIG. 4C, the elements in the area 1 may include the control 101, the control 102, the control 103, and the control 104, and the elements in the area 2 may include the control 105 and the control 106. If N = 1, the to-be-removed element in the electronic device is the control 101, and the total quantity of elements included in the area 2 (the total quantity of elements included in the area 2 is 2) is greater than N, the electronic device may set one element in the area 2 from the invisible state to the visible state, and set corresponding animation effect (that is, CHANGE_DISAPPEARING) for the one element. If N = 3, the to-be-removed elements in the electronic device are the control 101, the control 102, and the control 103, and the total quantity of elements included in the area 2 is less than N, the electronic device may set all elements in the area 2 (for example, the control 105 and the control 106) from the invisible state to the visible state, and set corresponding animation effect (that is, CHANGE_DISAPPEARING) for all elements.

It may be understood that the N to-be-removed elements in the area 1 may be any N elements included in the area 1, and specific positions and a sequence of any N elements in the area 1 are not limited in this application.

It may be understood that a selection rule for the M elements in the area 2 is not specifically limited in this application. In some embodiments of this application, the M elements in the area 2 are M elements that are added earliest to the area 2. For example, as shown in FIG. 4C, the area 2 may include the control 105 and the control 106, and a moment at which the electronic device adds the control 105 to the area 2 is earlier than a moment at which the electronic device adds the control 106 to the area 2. If the N to-be-removed elements in the area 1 are the control 101, the M elements in the area 2 are the control 105; or if the N to-be-removed elements in the area 1 are the control 101, the control 102, and the control 103, the M elements in the area 2 are the control 105 and the control 106. In some other embodiments of this application, the selection of the M elements in the area 2 depends on other elements. Once the other elements are changed, the M elements in the area 2 selected by the electronic device are changed correspondingly. In some other embodiments of this application, the M elements in the area 2 may be M elements with a highest priority in the area 2. It may be understood that a priority setting rule for each element in the container 1 is not limited in this application.

It may be understood that specific animations corresponding to DISAPPEARING and CHANGE_DISAPPEARING may be set based on an actual need. This is not limited in this application. The specific animation may include a translation animation, a zooming animation, an alpha animation, and a rotation animation. The specific animation may specifically relate to a change in an attribute (for example, the size, the position, the alpha, and the like) of the View.

In some embodiments of this application, the electronic device may change the M elements from the invisible state to the visible state by setting the alpha of the M elements in the area 2. For example, the electronic device may set the corresponding alpha of the M elements in the area 2 to 1, that is, set the alpha of the M elements to 0%.

In some embodiments of this application, the electronic device may specifically set the visibility of the M elements in the area 2 through a setvisibility method. Specifically, the electronic device may set the M elements in the area 2 to the visible state by invoking the setvisibility method and setting a parameter to View.VISIBLE (the parameter may be further replaced with a constant 0 during use).

S105: Simultaneously update the elements included in the area 1 and the elements included in the area 2.

After the electronic device separately sets the corresponding animation effect for the elements in the area 1 and the M elements in the area 2, the electronic device may display the animation effect. Based on the animation effect, the electronic device may simultaneously update the element included in the area 1 and the element included in the area 2. Specifically, the electronic device may remove the N elements from the area 1 when moving the M elements in the area 2 from the area 2 to the area 1 for display. It should be noted that in some embodiments of this application, in the process in which the electronic device displays the animation effect set for the M elements in the area 2 (that is, moving the M elements in the area 2 from the area 2 to the area 1), the M elements may gradually fade from invisible to visible, that is, the alpha of the M elements may gradually decrease from 100% to 0%.

In some embodiments of this application, that the electronic device simultaneously updates the element included in the area 1 and the element included in the area 2 may specifically include: Duration between a moment at which the electronic device starts updating the element included in the area 1 and a moment at which the electronic device starts updating the element included in the area 2 is not greater than T1.

In some embodiments of this application, that the electronic device simultaneously updates the element included in the area 1 and the element included in the area 2 may specifically include: The electronic device completes, in T2, the updating of the element included in the area 1 and the element included in the area 2.

It may be understood that T1 and T2 may be set based on an actual need. This is not limited in this application.

It may be understood that before the electronic device renders each frame of the user interface, the electronic device may change attributes of the elements (including the N to-be-removed elements in the area 1 and the M elements in the area 2) included in the area 1 and the area 2. After the attributes of the elements are changed, the electronic device renders the elements based on changed attributes of the elements, and displays the elements on the display. In other words, the electronic device may implement the animation effect for the elements included in the area 1 and the area 2 by changing the attributes (for example, the size, the position, the alpha, and the like) of the elements frame by frame.

Specifically, in the process in which the electronic device performs the corresponding animation effect for the N to-be-removed elements in the area 1, the other elements in the area 1, and the M elements in the area 2, the electronic device may determine, based on a movement rule and movement speed (for example, moving 30 dp to the left and completing the movement within 3 seconds) corresponding to the animation effect and a display frame rate of the user interface, positions of the N to-be-removed elements in the area 1, the other elements in the area 1, and the M elements in the area 2 in a next frame of the user interface, and sizes of the elements that are in an area in the area 1.

In some embodiments of this application, by setting the alpha, the electronic device may enable the elements in the area 1 to be visible and enable the elements in other areas to be invisible. Specifically, the electronic device may change the positions of the N to-be-removed elements in the area 1, the other elements in the area 1, and the M elements in the area 2 in the next frame of the user interface based on the positions that are of the elements and that are determined by the electronic device, and change the alpha of the elements based on the sizes that are of the elements that are in the area 1 in the next frame of the user interface and that are determined by the electronic device. Specifically, the electronic device may set, to 1, an alpha corresponding to the elements that are in the area 1, and set, to 0, an alpha corresponding to the elements that are outside the area 1.

In some embodiments of this application, the electronic device may enable the elements that are in the area 1 to be visible and enable the elements in other areas to be invisible by directly changing sizes and positions of the elements. Specifically, the electronic device may directly change the positions and sizes of the N to-be-removed elements in the area 1, the other elements in the area 1, and the M elements in the area 2 in the next frame of the user interface based on the positions that are of the elements and that are determined by the electronic device and the sizes that are of the elements that are in the area 1 and that are determined by the electronic device.

For example, the N to-be-removed elements in the area 1 may be ViewA, the area 1 may further include ViewB, the M elements in the area 2 may be ViewC, and original sizes of ViewA, ViewB, and ViewC are the same. In the process in which the electronic device performs DISAPPEARING for ViewA, performs CHANGE_DISAPPEARING for ViewB, and performs CHANGE_DISAPPEARING for ViewC, the electronic device may change attributes of ViewA, ViewB, and ViewC frame by frame. Specifically, in the process in which the electronic device performs corresponding animation effect for ViewA, ViewB, and ViewC, based on the movement rule and the movement speed corresponding to the animation effect, if ViewA, ViewB, and ViewC move to the boundary of the area 1 according to the original sizes, at a specific moment, only a part area of ViewA is located in the area 1, ViewB is entirely located in the area 1, one part area of ViewC is located in the area 1, and the other part of ViewC is located in the area 2. In this case, the electronic device may determine a size and a position of the part area of ViewA in the area 1, adjust a size and a position of ViewA to the size and the position of the part area of ViewA in the area 1, determine a size and a position of the one part area of ViewC in the area 1, and adjust a size and a position of ViewC to the size and the position of the one part area of ViewC in the area 1. The electronic device may further determine that the size of ViewB remains unchanged, determine the position of ViewB, and correspondingly adjust the position of ViewB. The electronic device may draw the next frame of the user interface based on the adjusted sizes and positions of ViewA, ViewB, and ViewC, and display the next frame of the user interface on the display screen. As shown in FIG. 6A(3), compared to positions of ViewA, ViewB, and ViewC shown in FIG. 6A(2), positions of ViewA, ViewB, and ViewC shown in FIG. 6A(3)are all changed. In addition, ViewA and ViewB in FIG. 6A(2) are all visible, ViewC in FIG. 6A(2) is invisible. ViewA in FIG. 6A(3) is partially visible, ViewB in FIG. 6A(3) is fully visible, and ViewC inFIG. 6A(3) is partially visible. It may be understood that after the animation effect for ViewA, ViewB, and ViewC are performed and displayed, the electronic device may display the user interface shown in FIG. 6A(4), that is, display only ViewB and ViewC.

It may be understood that the animation effect for the other elements in the area 1 and the animation effect for the M elements in the area 2 are all CHANGE_DISAPPEARING. In some embodiments of this application, the electronic device may additionally add effect for the M elements based on CHANGE_DISAPPEARING. For example, the electronic device may set that the alpha of the M elements is gradually changed from 0 to 1. Specifically, the electronic device may set, to 0, the alpha of the M elements that are out of the area 1, remain the alpha unchanged, and set that the alpha of the M elements that are in the area 1 is gradually changed from 0 to 1 (for example, when the user interface is refreshed each time, the alpha is changed by 0.1).

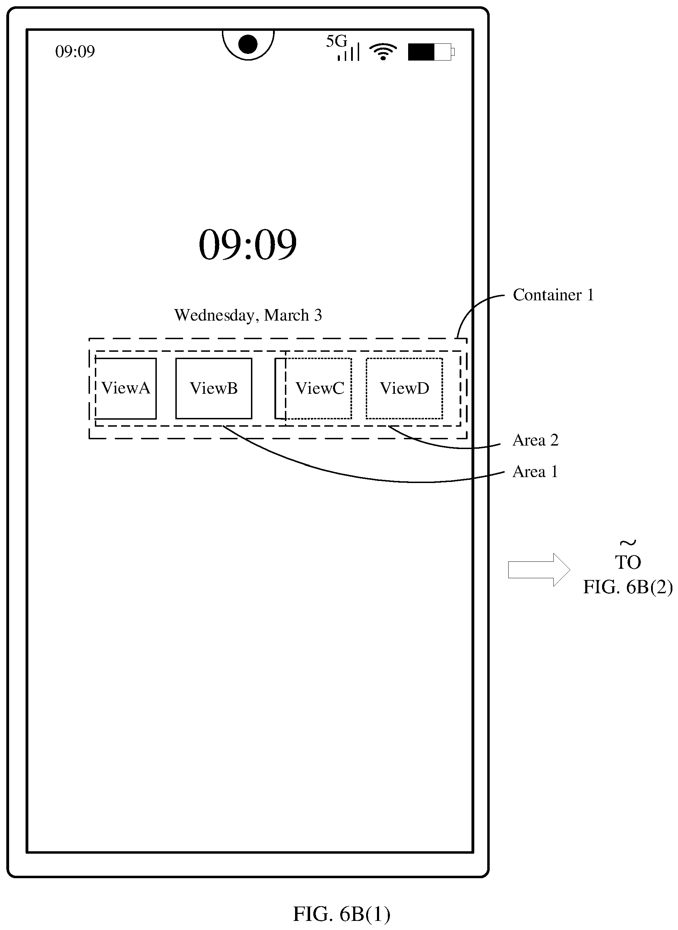

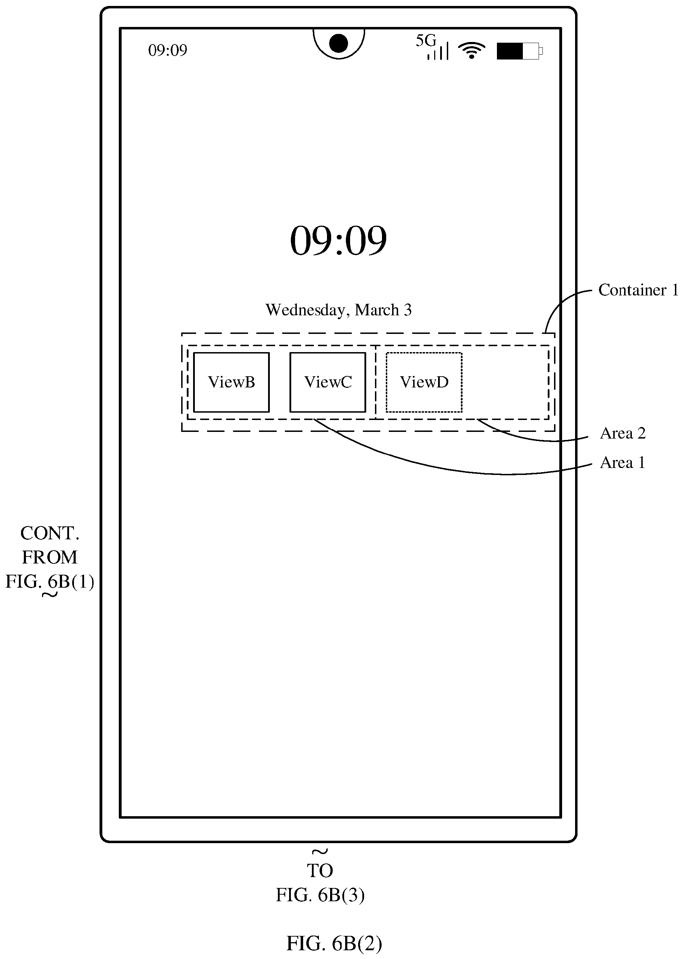

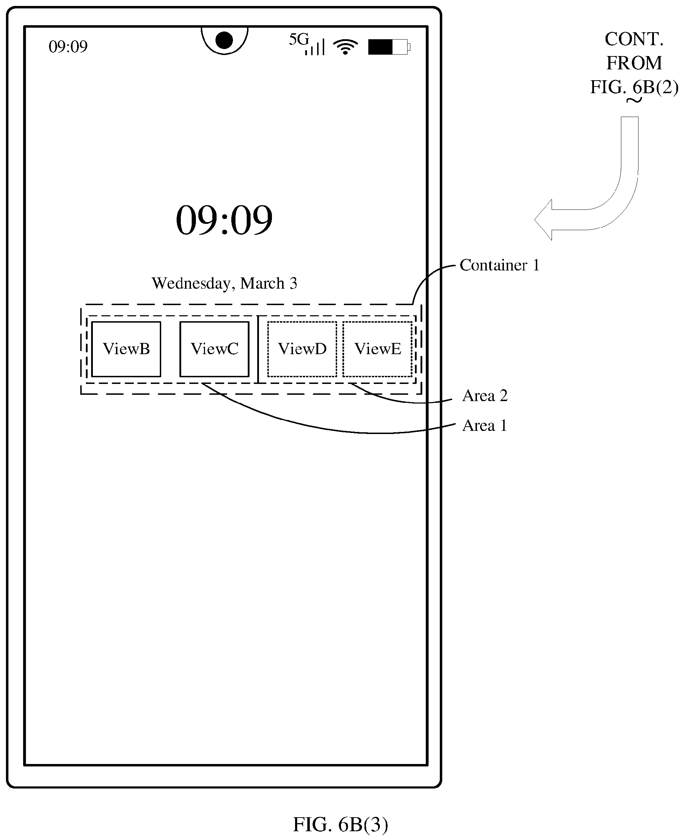

In some embodiments of this application, the area 2 may include an element other than the M elements. In this case, as the element in the area 1 and the M elements in the area 2 move, the other elements in the area 2 may move correspondingly, and the element, other than the M elements, in the area 2 are invisible to the user, and the movement process of the element is also invisible. For example, as shown in FIG. 6A(1) and FIG. 6B(2), as ViewA, ViewB, and ViewC move, ViewD in the area 2 may move correspondingly, and stop moving until ViewD moves to an original position of ViewC. However, the user cannot see the movement process of ViewD on the display screen.

In the foregoing description, if the quantity of elements included in the area 2 in the container 1 reaches the threshold 2, the electronic device may record related information (for example, the size, the position, the alpha, and the like) of the new element after detecting the operation of adding the new element to the container 1. Subsequently, after detecting the removal operation performed on the N elements in the area 1, the electronic device may set animation effect for the element in the container 1 and perform the animation effect, may further determine the size of the new element based on the related information of the new element, determine the layout position of the new element based on the size and the layout rule of the parent container (for example, the container 1) of the new element, thereby determining the accurate position and size of each View on the display screen. Then, the electronic device may perform the drawing operation based on the alpha and other attributes of the new element, and display the drawing results on the display screen. For example, when the quantity of elements included in the area 2 in the container 1 reaches the threshold 2, the electronic device may detect the operation of adding ViewE to the container 1, and in response to this operation, the electronic device may record related information of ViewE. As shown in FIG. 6B(3), after the electronic device removes ViewA, the electronic device may cache ViewE in the area 2.

It may be understood that, through the above method, the electronic device may cache an element into a specific area in the container, and set the element to the invisible state. When one element needs to be removed from the container, the electronic device may set a cached element to CHANGE_DISAPPEARING. In this way, animation effect for the removed element and animation effect for the pre-cached element may be performed simultaneously, that is, the electronic device may simultaneously display an element removal animation and an element addition animation. Therefore, the entire animation process is smoother.

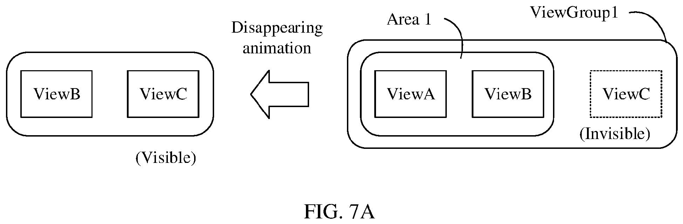

For example, as shown in FIG. 7A, the electronic device may display ViewA and ViewB on the display screen. ViewA and ViewB are two child Views in ViewGroup1. ViewA and ViewB are located in an area 1 of ViewGroup1. Because the quantity of elements in the area 1 reaches a maximum quantity of elements that may be laid out in the area 1, if the electronic device needs to add ViewC to ViewGroup1, the electronic device may pre-cache ViewC to an area (for example, the area 2) other than the area 1 in ViewGroup1, and set ViewC to the invisible state. Because ViewC is cached in ViewGroup1, once the electronic device needs to remove ViewA from ViewGroup1, the electronic device may display only disappearing animation effect. That is, when the electronic device removes ViewA from the area 1, the electronic device may move ViewC to the area 1, and set ViewC to the visible state, thereby simultaneously implementing the removal of ViewA and the addition of ViewC.

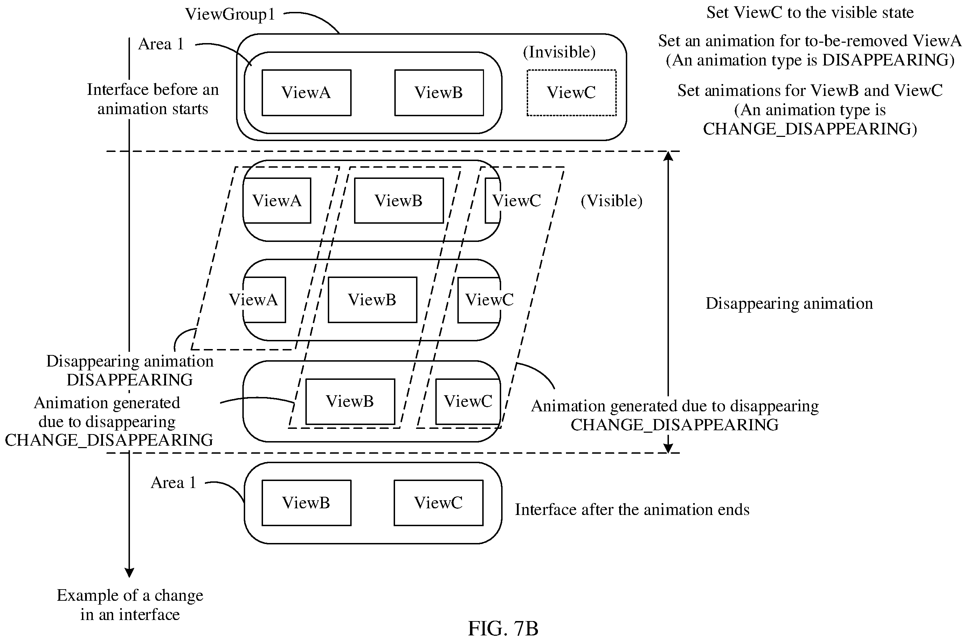

Specifically, as shown in FIG. 7B, if the electronic device needs to remove ViewA from ViewGroup1 and add ViewC to ViewGroup1, the electronic device may pre-cache ViewC, set ViewC to the invisible state, set an animation type of ViewA to DISAPPEARING, and set animation types of both ViewB and ViewC to CHANGE_DISAPPEARING. The electronic device may simultaneously perform a disappearing animation effect, for example, simultaneously display the animation effects set for ViewA, ViewB, and ViewC. As shown in FIG. 7B, ViewA, ViewB, and ViewC may move to the left until ViewA moves to a left boundary of the area 1 and completely disappears, ViewB moves to an original position of ViewA, and ViewC moves to an original position of ViewB. It may be understood that after the animation effects set for ViewA, ViewB, and ViewC are displayed, the electronic device may display ViewB and ViewC in ViewGroup1. In this way, the electronic device may display the animation effects set for ViewC when displaying the animation effects set for ViewA and ViewB. Therefore, the entire animation effect is smoother.

**The following describes a hardware structure of the electronic device in an embodiment of this application.**

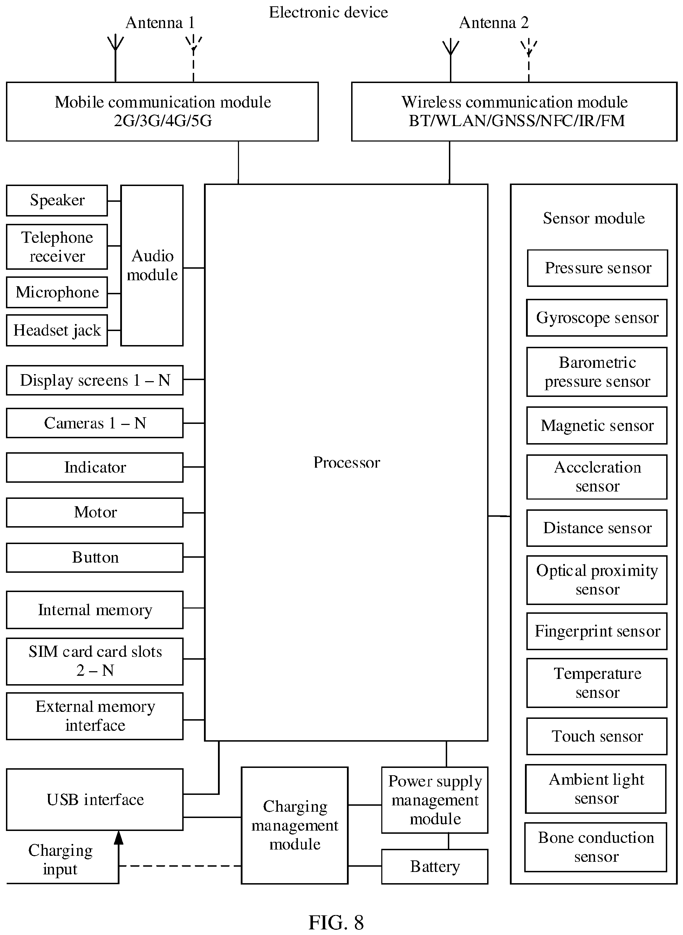

Refer to FIG. 8. FIG. 8 is a schematic diagram of a hardware structure of an electronic device according to an embodiment of this application.

As shown in FIG. 8, the electronic device may include a processor, an external memory interface, an internal memory, a universal serial bus (Universal Serial Bus, USB) interface, a charging management module, a power management module, a battery, an antenna 1, an antenna 2, a mobile communication module, a wireless communication module, a sensor module, a key, a motor, an indicator, a camera, a display screen, a subscriber identity module (Subscriber Identity Module, SIM) card slot, and the like. The audio module may include a speaker, a telephone receiver, a microphone, a headset jack, and the like. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of this application does not constitute a specific limitation on the electronic device. It may be understood that the components in the figure may be implemented by hardware, software, or a combination of software and hardware. In some embodiments of this application, the electronic device may include more components than those shown in the figure. For example, the electronic device may include other types of sensors. In some embodiments of this application, the electronic device may include fewer components than those shown in the figure, some components may be combined, some components may be split, or different arrangements may be used. An interface connection relationship between the modules illustrated in this embodiment of this application is merely a schematic description, and does not constitute a limitation on the structure of the electronic device.

The processor may include one or more processing units. For example, the processor may include an application processor (Application Processor, AP), a modem (Modem, also referred to as a baseband processor), a graphics processing unit (Graphics Processing Unit, GPU), an image signal processor (Image Signal Processor, ISP), a controller, a video codec, a digital signal processor (Digital Signal Processor, DSP), and/or a neural-network processing unit (Neural-network Processing Unit, NPU). AP is a processor that is used to run an operating system and an application. The Modem is a processor that is used to processing a communication protocol.

A wireless communication function of the electronic device may be implemented by using the antenna 1, the antenna 2, the mobile communication module, the wireless communication module, the modem, and the like. The modem may interact with a base station by using an antenna (for example, the antenna 1, the antenna 2, and the like). In some embodiments, in the electronic device, the antenna 1 and the mobile communication module are coupled, and the antenna 2 and the wireless communication module are coupled, so that the electronic device can communicate with a network and another device by using a wireless communication technology.

The electronic device may implement a display function by using the GPU, the display screen, the application processor, and the like.

The GPU is a microprocessor for image processing, and is connected to the display screen and the application processor. The GPU is configured to perform mathematical and geometric computation, and render an image. The processor may include one or more GPUs, which execute program instructions to generate or change display information. The display screen is configured to display an image, a video, and the like. In some embodiments, the electronic device may include one or more display screens.

A camera is configured to capture a static image or a video. The ISP is configured to process data fed back by the camera. Light is transferred to a camera photosensitive element through a lens. An optical signal is converted into an electrical signal. The camera photosensitive element transfers the electrical signal to the ISP for processing, to convert the electrical signal into an image visible to naked eyes. The electronic device may include one or more cameras.

The internal memory may include one or more RAMs, and one or more non-volatile memories (Non-Volatile Memory, NVM). The random access memory may be directly read and written by the processor, may be configured to store executable programs (such as machine instructions) of an operating system or other running programs, and may further be configured to store data of the user and data of application programs. The non-volatile memory may also store the executable programs, the data of the users and the applications, and the like, and may be loaded into the random access memory in advance for the processor to perform direct reading and writing.

In this embodiment of this application, code for implementing the method described in the embodiments of this application may be stored in the non-volatile memory. When running the camera application, the electronic device may load the executable code stored in the non-volatile memory into the random access memory.

The external memory interface may be configured to connect to an external memory card, so as to expand a storage capacity of the electronic device.

The electronic device may implement an audio function by using the audio module, the speaker, the telephone receiver, the microphone, the headset jack, an application processor, and the like.

The operating system of the electronic device may use a layered architecture, an event-driven architecture, a microcore architecture, a microservice architecture, or a cloud architecture. In this embodiment of this application, an Android system with the layered architecture is used as an example to describe a software structure of the electronic device. It should be noted that although the Android system is used as an example for description in this embodiment of this application, a basic principle thereof is also applicable to an electronic device based on an operating system such as iOS or Windows.

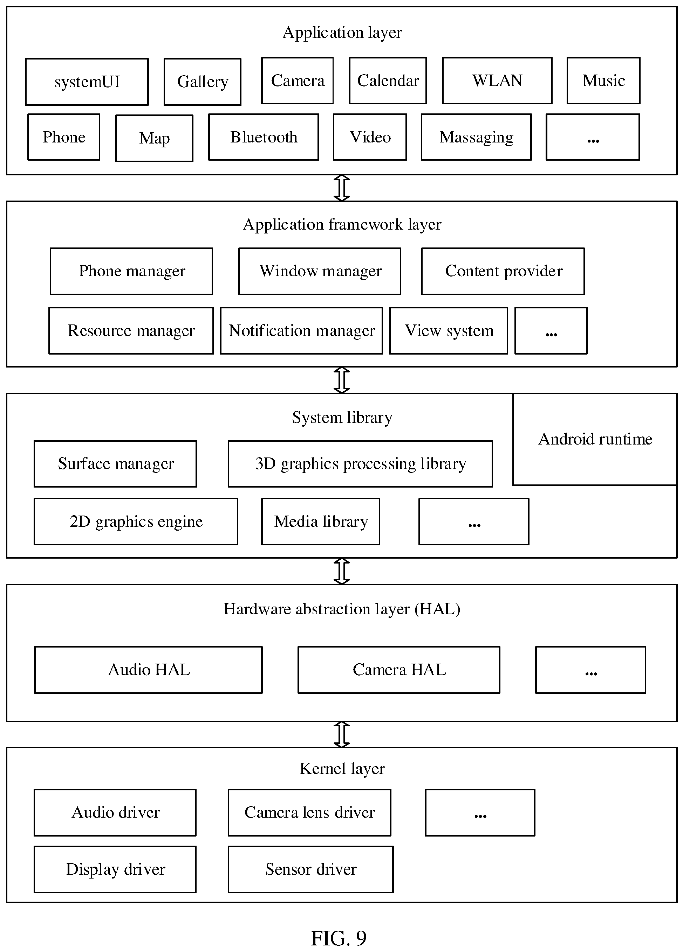

FIG. 9 is a schematic diagram of a software structure of an electronic device according to an embodiment of this application.

A software structure of the electronic device divides software into several layers, and each layer has a clear function and division of labor. The layers communicate with each other by using a software interface. The Android system and the Android system running on an AP are used as an example. In some embodiments of this application, a software structure of the Android system is divided into five layers: an application layer, an application framework layer (Framework) runtime (Android runtime) and a system library, a hardware abstraction layer (HAL), and a system kernel (Kernel) layer from top to bottom.

The application layer may include a series of application packages. The application packages may include applications such as camera, gallery, calendar, phone, maps, WLAN, Bluetooth, music, videos, and SMS messages. The application layer may further include a note-taking application. The application layer may further include a system UI (System User Interface, SystemUI). The SystemUI is used to display an interface of the electronic device, for example, displaying a lock screen interface, displaying a signal icon corresponding to a SIM card, displaying a call interface, and the like.

The application framework layer provides an application programming interface (application programming interface, API) and a programming framework for the applications at the application layer. The application framework layer may include some predefined functions. For example, the application framework layer may include a window manager, a content provider, a view system, a phone manager, a resource manager, a notification manager, and the like. The view system may include visual controls such as a control for text display or a control for picture display. The view system may be configured to construct an application. A display interface may include one or more views. For example, a display interface including an SMS message notification icon may include a view for displaying a text and a view for displaying a picture. The view system may perform the method provided in this application. Specifically, the view system may configure an animation effect through a corresponding interface, and may further draw each frame of the user interface in the process in which the electronic device displays the animation effect. In the process of drawing the user interface, the view system may invoke a 3D graphics processing library and a 2D graphics engine in the system library.

The runtime (Runtime) is responsible for scheduling and managing the system. The Runtime includes a core library and a virtual machine. The kernel library includes two parts: a performance function that a programming language (for example, a java language) needs to invoke, and a kernel library of the system. The application layer and the application framework layer are run in the virtual machine. The virtual machine executes programming files (for example, java files) of the application program layer and the application program framework layer as binary files. The virtual machine is configured to perform functions such as lifecycle management of an object, stack management, thread management, security and exception management, and garbage collection.

The system library may include a plurality of functional modules, for example, a surface manager (Surface Manager), a media library (Media Library), a three-dimensional graphics processing library (for example, OpenGL ES), a two-dimensional graphics engine (for example, SGL), and the like. For specific meanings and roles of these functional modules, refer to related technical documents. Details are not described herein.

The hardware abstraction layer (HAL) is an interface layer between an operating system kernel and upper software, and aims to abstract hardware. The hardware abstraction layer is an abstract interface driven by a device kernel, and is configured to provide a higher-level Java API framework with an application programming interface for accessing an underlying device. The HAL may provide a standard interface to display device hardware functions to the higher-level Java API framework. The HAL includes a plurality of library modules (such as a camera HAL and an audio HAL). When the system framework layer API requires access to hardware of the portable device, the operating system loads a library module for the hardware component.

The kernel layer is the foundation of the Android system. The kernel layer is responsible for functions such as a hardware driver, a network, power supply, system security, and memory management. The kernel layer is an intermediate layer between hardware and software, and is configured to transfer a request of an application program to the hardware. The kernel layer may include an audio driver, a display driver, a camera driver, and a sensor driver.

It should be noted that, the schematic diagram of the software structure of the electronic device shown in FIG. 9 provided in this application is only an example, and does not limit specific module division in different layers of the Android system. For details, refer to the descriptions of the software structure of the Android system in conventional technologies. In addition, the method provided in this application may alternatively be implemented based on another operating system, and examples are not provided in this application one by one.

The above description is merely particular implementations of the present invention, but the scope of protection of the present invention is not limited thereto. Any change or substitution that can be easily conceived by those skilled in the art within the technical scope disclosed by the present invention should all fall within the scope of protection of the present invention. Thus, the scope of protection of the present invention should be subject to the scope of protection of the claims.

## Claims

1. A display method, applied to an electronic device, wherein the electronic device comprises a display screen; and the method comprises:
displaying X elements in a first area of the display screen; and
removing N elements in the X elements from the first area when a preset condition is satisfied, and moving M new elements to the first area for display,
wherein animation type information of the N elements is first type information, and animation type information of the M elements is second type information; the first type information indicates animation disappearance, and the second type information indicates an animation changed based on the animation disappearance; and X, N, and M are all positive integers, N is less than or equal to X, and M is less than or equal to N.

2. The method according to claim 1, wherein the removing N elements in the X elements from the first area when a preset condition is satisfied comprises:
removing the N elements in the X elements from the first area when a first operation of a user is detected.

3. The method according to claim 2, wherein the first operation is a sliding operation performed on the first area.

4. The method according to claim 1, wherein the removing N elements in the X elements from the first area when a preset condition is satisfied comprises:
removing the N elements in the X elements from the first area when an item corresponding to the N elements is in a target state.

5. The method according to claim 4, wherein that an item corresponding to the N elements is in a target state comprises:
an item corresponding to each element in the N elements is in a completed state, a viewed state, or a canceled state.

6. The method according to any one of claims 1 to 5, wherein an element displayed in the first area is a notification icon, and the notification icon comprises at least one of a travel icon, a message icon, a schedule icon, and a weather icon.

7. The method according to any one of claims 1 to 6, wherein X is greater than N; and the method further comprises:
moving an element, other than the N elements, in the X elements in the first area when the preset condition is satisfied, wherein animation type information of the element, other than the N elements, in the X elements is the second type information.

8. The method according to any one of claims 1 to 7, wherein the first type information is a disappearing animation DISAPPEARING, and the second type information is an animation generated due disappearing CHANGE_DISAPPEARING.

9. The method according to any one of claims 1 to 8, wherein the electronic device is provided with a first container, the first container comprises a first area and a second area, the first area is a visible area, and the second area is used to cache a new element in the first container, and an element in the second area is in an invisible state; before the removing N elements in the X elements from the first area and moving M new elements to the first area for display, the second area comprises the M elements; and
the moving M new elements to the first area for display comprises: setting the M elements from the invisible state to a visible state, and moving the M elements from the second area to the first area for display.

10. The method according to claim 9, wherein that a preset condition is satisfied further comprises: X is equal to a first threshold, and the second area comprises at least one element.

11. The method according to claim 9 or 10, wherein the M elements are M elements that are added earliest to the elements comprised in the second area.

12. The method according to any one of claims 9 to 11, wherein when N is less than or equal to a total quantity of elements comprised in the second area, M is equal to N; or when N is greater than a total quantity of elements comprised in the second area, M is equal to the total quantity of elements comprised in the second area.

13. An electronic device, wherein the electronic device comprises a display screen, one or more memories, and one or more processors; the display screen is coupled to the one or more memories and the one or more processors, the display screen is configured to display an image, the memory is coupled to the one or more processors; the memory is configured to store computer program code; the computer program code comprises computer instructions; and the processor invokes the computer instructions to perform the method according to any one of claims 1 to 12.

14. A computer-readable storage medium, configured to store computer instructions, wherein when the computer instructions are run on an electronic device, the electronic device is enabled to perform the method according to any one of claims 1 to 12.
